(19) Europäisches Patentamt
European Patent Office
Office européen des brevets

(11) **EP 3 441 965 A1**

(12) **EUROPEAN PATENT APPLICATION**
published in accordance with Art. 153(4) EPC

(43) Date of publication:
**13.02.2019 Bulletin 2019/07**

(21) Application number: **17778827.0**

(22) Date of filing: **24.01.2017**

(51) Int Cl.:
*G10K 11/178* (2006.01)　　*B60R 11/02* (2006.01)
*H04R 1/02* (2006.01)

(86) International application number:
**PCT/JP2017/002219**

(87) International publication number:
**WO 2017/175448 (12.10.2017 Gazette 2017/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.04.2016　JP 2016076100**

(71) Applicant: **Sony Corporation**
**Tokyo 108-0075 (JP)**

(72) Inventors:
• **HAYASHI, Shigetoshi**
**Tokyo 108-0075 (JP)**
• **ASADA, Kohei**
**Tokyo 108-0075 (JP)**
• **ITABASHI, Tetsunori**
**Tokyo 108-0075 (JP)**
• **MAKINO, Kenichi**
**Tokyo 108-0075 (JP)**

(74) Representative: **2SPL Patentanwälte PartG mbB**
**Postfach 15 17 23**
**80050 München (DE)**

(54) **SIGNAL PROCESSING DEVICE, SIGNAL PROCESSING METHOD, AND PROGRAM**

(57)　　[Object] To reduce the influence of noise in a more preferred aspect even in an environment in which a user hears an acoustic sound output to an open space.

[Solution] A signal processing device includes: a generation unit configured to generate a first noise reduction signal for driving a first acoustic device which outputs a first acoustic sound for reducing noise; and an acquisition unit configured to acquire a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path. The generation unit generates the first noise reduction signal on a basis of the sound collection result and a cancellation signal based on a second noise reduction signal for driving the second acoustic device.

**FIG. 4**

**Description**

Technical Field

The present disclosure relates to a signal processing device, a signal processing method, and a program.

Background Art

With the development of voice synthesis technologies and the like, user interfaces (UIs) enabling users to recognize notification target information without confirming screens or the like when various information processing devices read the notification target information aloud by voice have recently become popular. The technologies are also applied to in-vehicle devices such as car navigation devices or the like.

Citation List

Patent Literature

Patent Literature 1: Japanese Patent No. 4882773

Disclosure of Invention

Technical Problem

Incidentally, in situations in which in-vehicle devices such as car navigation devices are used, various kinds of noise such as driving sounds of engines, motors, or the like or road noise caused by vibration or the like received from road surfaces by vehicles can be assumed to occur. Therefore, desired is an introduction of structures that further reduce the influence of noise, such as so-called noise cancellation, into in-vehicle devices. For example, Patent Literature 1 discloses an example of a technology called noise cancellation.

On the other hand, in situations in which users (for example, drivers) use in-vehicle devices such as car navigation devices, the users hear a voice guidance output from acoustic devices such as speakers installed in vehicles, unlike cases in which users hear voice via headphones, earphones, or the like. In environments in which users hear acoustic sounds output to open spaces in this way, for example, acoustic sounds from other acoustic devices are collected by sound collection units (for example, microphones) installed to reduce noise of acoustic sounds output from certain acoustic devices in some cases. In these cases, sound collection results of acoustic sounds from other acoustic devices have an influence on processes of reducing noise and are manifested as, for example, a phenomenon such as so-called howling in some cases.

Accordingly, the present disclosure proposes a signal processing device, a signal processing method, and a program capable of reducing the influence of noise in a more preferred aspect even in an environment in which a user hears an acoustic sound output to an open space.

Solution to Problem

According to the present disclosure, there is provided a signal processing device including: a generation unit configured to generate a first noise reduction signal for driving a first acoustic device which outputs a first acoustic sound for reducing noise; and an acquisition unit configured to acquire a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path. The generation unit generates the first noise reduction signal on a basis of the sound collection result and a cancellation signal based on a second noise reduction signal for driving the second acoustic device.

In addition, according to the present disclosure, there is provided a signal processing method including: by a processor, generating a first noise reduction signal for driving a first acoustic device which outputs a first acoustic sound for reducing noise; and acquiring a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path. The first noise reduction signal is generated on a basis of the sound collection result and a cancellation signal based on a second noise reduction signal for driving the second acoustic device.

In addition, according to the present disclosure, there is provided a program causing a computer to execute:

generating a first noise reduction signal for driving a first acoustic device which outputs a first acoustic sound for reducing noise; and acquiring a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path. The first noise reduction signal is generated on a basis of the sound collection result and a cancellation signal based on a second noise reduction signal for driving the second acoustic device.

Advantageous Effects of Invention

According to the present disclosure, as described above, it is possible to provide a signal processing device, a signal processing method, and a program capable of reducing the influence of noise in a more preferred aspect even in an environment in which a user hears an acoustic sound output to an open space.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 is an explanatory diagram illustrating an example of a schematic configuration of a noise reduction system according to an embodiment of the present disclosure.

[FIG. 2] FIG. 2 is an explanatory diagram illustrating the example of the schematic configuration of the noise reduction system according to the embodiment.

[FIG. 3] FIG. 3 is an explanatory diagram illustrating an overview of a noise reduction process based on a feedback scheme.

[FIG. 4] FIG. 4 is an explanatory diagram illustrating an overview of a noise reduction process based on a feedback scheme.

[FIG. 5] FIG. 5 is an explanatory diagram illustrating an overview of a noise reduction process based on a feedback scheme.

[FIG. 6] FIG. 6 is a block diagram illustrating an example of a functional configuration of the noise reduction system according to the embodiment.

[FIG. 7] FIG. 7 is an exemplary block diagram focusing on signal processing in the noise reduction system according to the embodiment.

[FIG. 8] FIG. 8 is a diagram illustrating an example of a simulation result of a relation between the degree of phase mismatch and an effect of a noise reduction process.

[FIG. 9] FIG. 9 is a diagram illustrating an example of a simulation result related to a phase change in accordance with a distance between an acoustic device and a sound collection unit.

[FIG. 10] FIG. 10 is an explanatory diagram illustrating conditions for installation positions of the acoustic device and the sound collection unit.

[FIG. 11] FIG. 11 is an explanatory diagram illustrating an example of a schematic configuration of the noise reduction system according to the embodiment.

[FIG. 12] FIG. 12 is an explanatory diagram illustrating an example of a schematic configuration of the noise reduction system according to the embodiment.

[FIG. 13] FIG. 13 is an explanatory diagram illustrating an example of a schematic configuration of a noise reduction system according to Modification Example 1.

[FIG. 14] FIG. 14 is an explanatory diagram illustrating another example of a schematic configuration of a noise reduction system according to Modification Example 1.

[FIG. 15] FIG. 15 is an explanatory diagram illustrating a change in a propagation environment of an acoustic sound output from an acoustic device 11 in accordance with a position of the head of a user.

[FIG. 16] FIG. 16 is an explanatory diagram illustrating a change in a propagation environment of an acoustic sound output from an acoustic device 11 in accordance with a position of the head of a user.

[FIG. 17] FIG. 17 is an exemplary block diagram focusing on signal processing of the noise reduction system according to Modification Example 1.

[FIG. 18] FIG. 18 is an explanatory diagram illustrating an example of a configuration and a method for estimating a position of the head of the user.

[FIG. 19] FIG. 19 is an explanatory diagram illustrating an example of a configuration and a method for estimating a position of the head of the user.

[FIG. 20] FIG. 20 is an explanatory diagram illustrating an example of a configuration and a method for estimating a position of the head of the user.

[FIG. 21] FIG. 21 is an explanatory diagram illustrating an example of a configuration and a method for estimating a position of the head of the user.

[FIG. 22] FIG. 22 is an explanatory diagram illustrating an overview of a noise reduction system according to Modification Example 2.

[FIG. 23] FIG. 23 is an explanatory diagram illustrating cross-fade.

[FIG. 24] FIG. 24 is an explanatory diagram illustrating a noise reduction system according to Modification Example 3.

[FIG. 25] FIG. 25 is a functional block diagram illustrating a configuration example of a hardware configuration of an information processing device that forms the noise reduction system according to an embodiment.

Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description will be made in the following order.

1. Overall configuration
2. Examination of noise reproduction process
3. Technical characteristics
3.1. Functional configuration
3.2. Signal processing
3.3. Installation positions of acoustic device and sound collection unit 4. Modification examples
4.1. Modification Example 1: example of case in which features of loop cancellers are adaptively controlled
4.2. Modification Example 2: example of control related to switching between filters
4.3. Modification Example 3: example of case in which number of systems of feedback is 3 or more.
5. Hardware configuration
6. Conclusion

<<1. Overall configuration>>

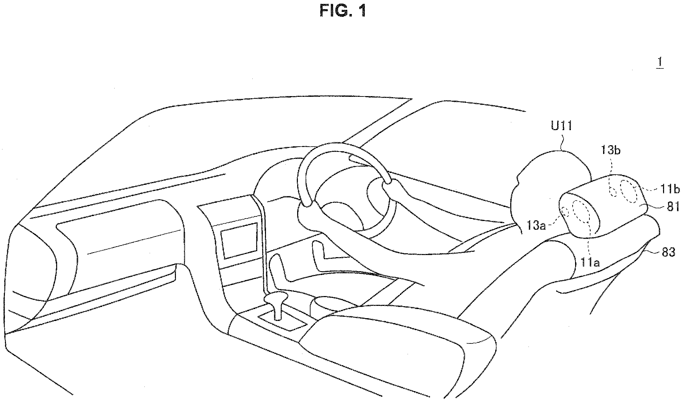

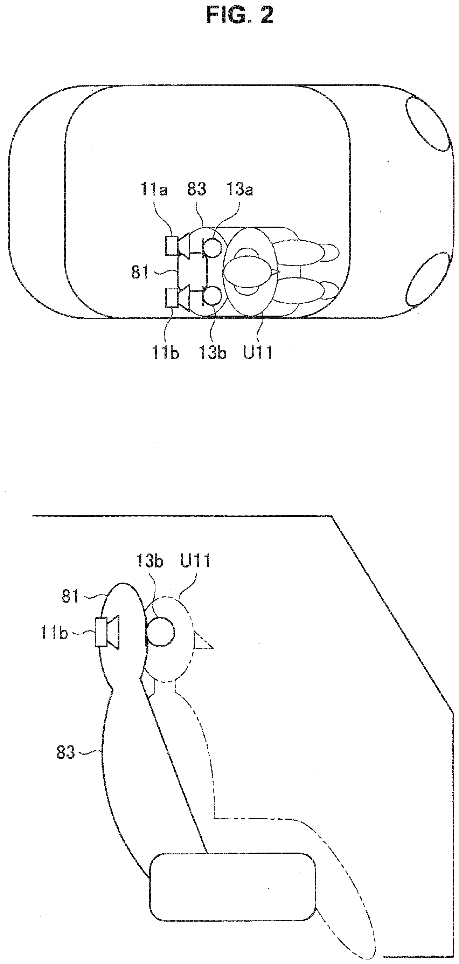

First, an example of an overall configuration of a noise reduction system according to an embodiment of the present disclosure will be described with reference to FIGS. 1 and 2. FIGS. 1 and 2 are explanatory diagrams illustrating an example of a schematic configuration of a noise reduction system according to an embodiment of the present disclosure.

A noise reduction system 1 according to the embodiment is mainly assumed to be used in an environment in which a user hears an acoustic sound output from an acoustic device such as a speaker to an open space, unlike a case in which a user hears a voice via a headphone, an earphone, or the like.

A specific application example of the noise reduction system 1 according to the embodiment is to reduce the influence of the driving sound of an engine, a motor, or the like or noise such as road noise caused due to vibration or the like received from a road surface by a vehicle on a voice or an acoustic sound from an in-vehicle device such as a car navigation device. More specifically, in the noise reduction system 1 according to the embodiment, an acoustic device 11 and a sound collection unit 13 are held to be located near right and left ears of a user U11 sitting on a seat installed in a vehicle. Note that in the following description, in a case in which the acoustic device 11 and the sound collection unit 13 held near the left ear of the user U11 are explicitly indicated, the acoustic device 11 and the sound collection unit 13 are referred to as "an acoustic device 11a and a sound collection unit 13a." Similarly, in a case in which the acoustic device 11 and the sound collection unit 13 held near the right ear of the user U11 are explicitly indicated, the acoustic device 11 and the sound collection unit 13 are referred to as "an acoustic device 11b and a sound collection unit 13b." For example, in the example illustrated in FIG. 1, the acoustic devices 11a and 11b and the sound collection units 13a and 13b are provided in a headrest 81 of a seat 83 installed in a vehicle.

For example, FIG. 2 illustrates an example of installation positions of each acoustic device 11 and each sound collection unit 13 in a case in which the acoustic devices 11a and 11b and the sound collection units 13a and 13b are installed in the vehicle. The upper drawing of FIG. 2 schematically illustrates a positional relation among a user U11, the acoustic devices 11a and 11b, and the sound collection units 13a and 13b in a case in which a seat 83 on which the user U11 sits is viewed vertically. In addition, the lower drawing of FIG. 2 schematically illustrates a positional relation among the user U11, the acoustic device 11b, and the sound collection unit 13b in a case in which the seat 83 is viewed from the right side in a traveling direction of the vehicle. Note that in the lower drawing, the acoustic device 11a and the sound collection unit 13a are omitted from the illustration to facilitate the configuration.

As illustrated in FIG. 2, the acoustic devices 11a and 11b are each installed inside the headrest 81. More specifically, the acoustic device 11a is installed at a left position inside the headrest 81 and the acoustic device 11b is installed at a right position inside the headrest 81. Note that the acoustic devices 11a and 11b are each installed to output acoustic sounds mainly frontward. In this configuration, in a case in which the headrest 81 holds the head of the user U11, the acoustic device 11a is located near the left ear of the user and the acoustic device 11b is located near the right ear of the user.

In addition, in the example illustrated in FIG. 2, the sound collection units 13a and 13b are each installed to be exposed through the surface of the headrest 81 on the front side. More specifically, the sound collection unit 13a is installed to be located near the left ear of the user U11 in a case in which the headrest 81 supports the head of the user U11. Similarly, the sound collection unit 13b is installed to be located near the right ear of the user U11 in the case in which the headrest 81 supports the head of the user U11. In this configuration, an acoustic sound output from the acoustic device 11a is heard by the left ear of the user U11 and is collected by the sound collection unit 13a. Similarly, an acoustic sound output from the acoustic device 11b is heard by the right ear of the user U11 and is collected by the sound collection unit 13b.

On the basis of the foregoing configuration, the noise reduction system 1 according to the embodiment reduces the influence of noise on the acoustic sound output from each of the acoustic devices 11a and 11b through a noise reduction process based on a so-called feedback (FB) scheme. Note that an overview of the noise reduction process based on the FB scheme will be separately described below.

The example of the schematic configuration of the noise reduction system according to the embodiment of the present disclosure has been described above with reference to FIGS. 1 and 2.

<<2. Examination of noise reproduction process>>

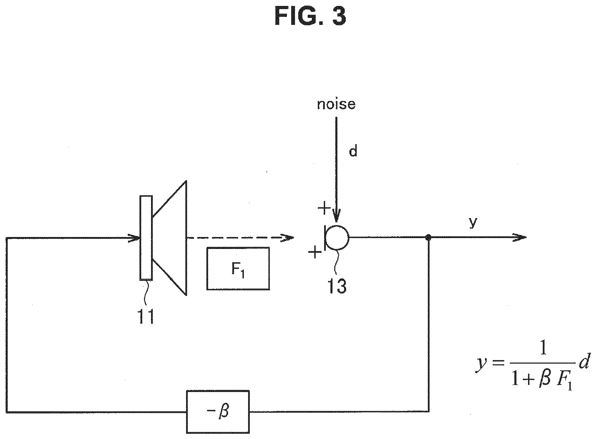

Next, an overview of the noise reduction process based on the FB scheme will be described and problems of the noise reduction system 1 according to the embodiment will be summarized with reference to FIGS. 3 to 5. FIGS. 3 to 5 are explanatory diagrams illustrating an overview of the noise reduction process based on the FB scheme.

First, a principle of the noise reduction process based on the FB scheme will be described with reference to FIG. 3. In FIG. 3, reference numeral F1 schematically denotes a transfer function of a propagation environment until an acoustic sound output from the acoustic device 11 arrives at the sound collection unit 13. In addition, reference numeral d denotes noise from a surrounding environment. That is, in the example illustrated in FIG. 3, the sound collection unit 13 collects the noise d and the acoustic sound output from the acoustic device 11. In addition, reference numeral $\beta$ denotes a filter coefficient when a noise reduction signal is generated on the basis of a sound collection result of the acoustic sound by the sound collection unit 13. In the foregoing configuration, an acoustic signal y based on the sound collection result of the sound collection unit 13 is represented in a relational expression expressed as (Expression 1) below by the noise reduction process based on the FB scheme.

[Math. 1]

$$y = \frac{1}{1 + \beta F_1} d$$

$$\cdot \cdot \cdot (\text{Expression 1})$$

As illustrated above, the noise reduction process based on the FB scheme has a purpose for reducing (furthermore, silences) noise at the position of the sound collection unit 13, and a noise reduction effect is restricted to the vicinity of the sound collection unit 13. That is, ideally, in order to improve the noise reduction effect at the position of the head (eardrum) of a hearer (a user), it is more preferable to install the sound collection unit 13 at a position close to the eardrum. Note that phase rotation caused by a time delay increases as a distance between the acoustic device 11 and the sound collection unit 13 is farther. Therefore, there is a tendency of difficulty in controlling the noise reduction process. Therefore, it is more preferable to install the sound collection unit 13 near the acoustic device 11.

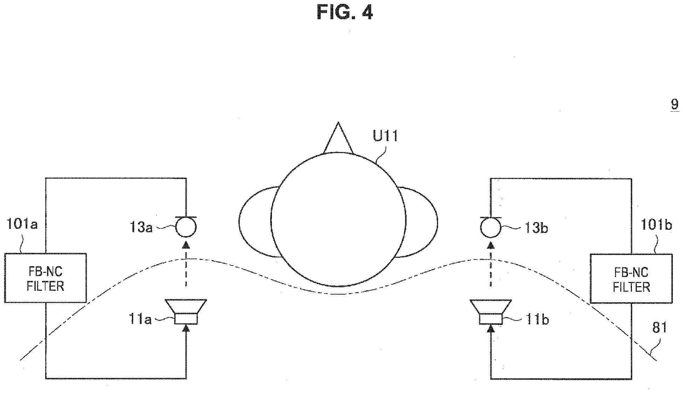

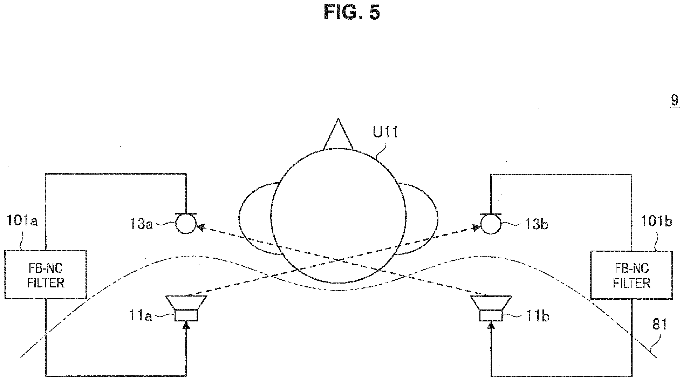

On the other hand, in a case in which acoustic sounds from the different acoustic devices 11a and 11b are caused to be heard by the left and right ears of the user as in the noise reduction system 1 according to the embodiment, there are a plurality of systems of series of feedback for noise reduction. Accordingly, an example of a system in a case in which a plurality of systems for noise reduction based on the FB scheme (that is, systems of feedback) are provided will be described with reference to FIGS. 4 and 5 according to a comparative example.

For example, FIG. 4 schematically illustrates an ideal operation situation in a case in which the plurality of systems for noise reduction based on the FB scheme are provided. As illustrated in FIG. 4, in a system 9 according to the comparative example, the acoustic devices 11a and 11b and the sound collection unit 13a and 13b are installed in the headrest 81, as in the noise reduction system 1 illustrated in FIGS. 1 and 2. That is, the acoustic device 11a and the sound collection unit 13a are held near the left ear of the user U11, and the acoustic device 11b and the sound collection unit 13b are held near the right ear of the user U11.

In addition, the system 9 includes feedback noise cancellation filters (hereinafter also referred to as "FB-NC filters") 101a and 101b. The FB-NC filters 101a and 101b have a configuration in which a noise reduction signal is generated. More specifically, the FB-NC filter 101a generates a noise reduction signal for driving the acoustic device 11a to output an acoustic sound for reducing noise from the acoustic device 11a on the basis of a sound collection result by the sound collection unit 13a. That is, the acoustic device 11a, the sound collection unit 13 a, and the FB-NC filter 101a are equivalent to a system of a series of feedback for achieving a noise reduction effect near the left ear of the user U11. Similarly, the FB-NC filter 101b generates a noise reduction signal for driving the acoustic device 11b to output an acoustic sound for reducing noise from the acoustic device 11b on the basis of a sound collection result by the sound collection unit 13b. That is, the acoustic device 11b, the sound collection unit 13b, and the FB-NC filter 101b are equivalent to a system of a series of feedback for achieving a noise reduction effect near the right ear of the user U11.

Here, in the system 9 according to the comparative example, as illustrated in FIG. 4, ideally, a system for the left ear (the acoustic device 11a, the sound collection unit 13a, and the FB-NC filter 101a) and a system for the right ear (the acoustic device 11b, the sound collection unit 13b, and the FB-NC filter 101b) preferably operate independently. More specifically, in the example illustrated in FIG. 4, the noise reduction signal generated by the FB-NC filter 101a on the basis of the sound collection result by the sound collection unit 13a drives the acoustic device 11a. Thus, an acoustic sound based on the noise reduction signal is output from the acoustic device 11a, the acoustic sound propagates in a space near the left ear of the user U11, and the acoustic sound is collected by the sound collection unit 13a. That is, ideally, a closed loop of feedback is formed by the acoustic device 11a, the sound collection unit 13a, and the FB-NC filter 101a. Similarly, the noise reduction signal generated by the FB-NC filter 101b on the basis of the sound collection result by the sound collection unit 13b drives the acoustic device 11b. Thus, an acoustic sound based on the noise reduction signal is output from the acoustic device 11b, the acoustic sound propagates in a space near the right ear of the user U11, and the acoustic sound is collected by the sound collection unit 13b. That is, ideally, a closed loop of feedback is formed by the acoustic device 11b, the sound collection unit 13b, and the FB-NC filter 101b.

However, as illustrated in FIG. 4, in an environment in which the user hears acoustic sounds output to open spaces from the acoustic devices 11a and 11b, the system on the left ear side and the system on the right ear side described above may not necessarily operate independently. As a specific example, in an example illustrated in FIG. 5, an acoustic sound for reducing noise output from the acoustic device 11a on the left ear side is collected by the sound collection unit 13b on the right ear side. As a result, the FB-NC filter 101b executes a noise reduction process on the acoustic signal based on the sound collection result of the acoustic sound by the sound collection unit 13b to generate a noise reduction signal, and the acoustic device 11b for the right ear is driven by the noise reduction signal. Thus, an acoustic sound based on the noise reduction signal is output from the acoustic device 11b. When the acoustic sound for reducing noise output from the acoustic device 11b is collected by the sound collection unit 13a on the left ear side, a figure-eight-shaped closed loop which is not originally assumed is formed, as illustrated in FIG. 5. The figure-eight-shaped closed loop illustrated in FIG. 5 deteriorates independency of the systems of feedback (for example, independency of the system on the right ear side and the system on the left ear side). Therefore, the noise reduction effect deteriorates and furthermore there is a possibility of a phenomenon called howling being manifested.

Accordingly, the present disclosure proposes an example of a structure capable of suppressing an influence associated with formation of the above-described figure-eight-shaped closed loop which can occur in an environment in which a user hears acoustic sounds output to an open space and reducing the influence of noise in a more preferred aspect.

«3. Technical characteristics»

Next, technical characteristics of the noise reduction system 1 according to the embodiment will be described.

<3.1. Functional configuration>

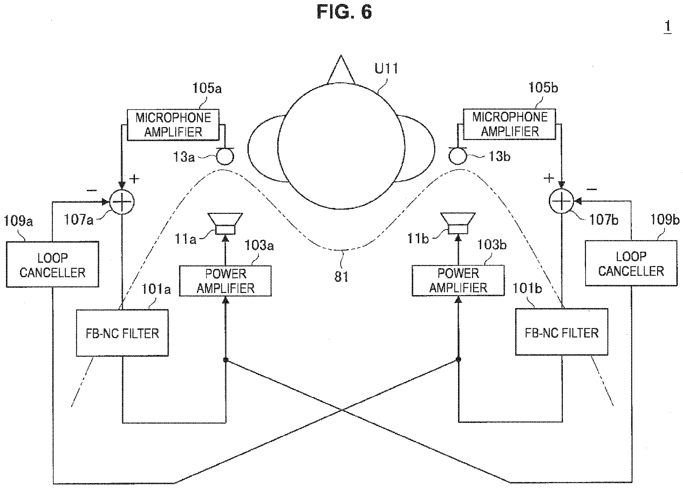

First, an example of a functional configuration of the noise reduction system 1 according to the embodiment will be described with reference to FIG. 6. FIG. 6 is a block diagram illustrating the example of the functional configuration of the noise reduction system 1 according to the embodiment.

As illustrated in FIG. 6, the noise reduction system 1 according to the embodiment includes acoustic devices 11a and 11b, sound collection units 13a and 13b, FB-NC filters 101a and 101b, power amplifiers 103a and 103b, microphone amplifiers 105a and 105b, subtractors 107a and 107b, and loop cancellers 109a and 109b. Note that the acoustic devices 11a and 11b and the sound collection units 13a and 13b are equivalent to the acoustic devices 11a and 11b and the sound collection units 13a and 13b illustrated in FIGS. 1 and 2. In addition, the power amplifiers 103a and 103b and the microphone amplifiers 105a and 105b are equivalent to so-called amplifiers that adjust gains of acoustic signals.

As illustrated in FIG. 6, a gain of an acoustic signal based on a sound collection result by the sound collection unit 13a is adjusted by the microphone amplifier 105a, and the acoustic signal is input to the subtractor 107a. In addition, a cancellation signal output from the loop canceller 109a to be described below is input to the subtractor 107a. The subtractor 107a subtracts the cancellation signal output from the loop canceller 109a from an acoustic signal (that is, an acoustic signal based on the sound collection result by the sound collection unit 13a) output from the microphone amplifier 105a and inputs the acoustic signal obtained as a subtraction result to the FB-NC filter 101a. The FB-NC filter 101a generates a noise reduction signal by executing a noise reduction process in accordance with a feature of a propagation environment between the acoustic device 11a and the sound collection unit 13a on the input acoustic signal and outputs the noise reduction signal as a driving signal for driving the acoustic device 11a. That is, a gain of the noise reduction signal output from the FB-NC filter 101a is adjusted by the power amplifier 103a to drive the acoustic device 11a. Note that the noise reduction signal output from the FB-NC filter 101a is partially split by a splitter or the like to be input to the loop canceller 109b.

Similarly, a gain of an acoustic signal based on a sound collection result by the sound collection unit 13b is adjusted by the microphone amplifier 105b, and the acoustic signal is input to the subtractor 107b. In addition, a cancellation signal output from the loop canceller 109b to be described below is input to the subtractor 107b. The subtractor 107b subtracts the cancellation signal output from the loop canceller 109b from an acoustic signal (that is, an acoustic signal based on the sound collection result by the sound collection unit 13b) output from the microphone amplifier 105b and inputs the acoustic signal obtained as a subtraction result to the FB-NC filter 101b. The FB-NC filter 101b generates a noise reduction signal by executing a noise reduction process in accordance with a feature of a propagation environment between the acoustic device 11b and the sound collection unit 13b on the input acoustic signal and outputs the noise reduction signal as a driving signal for driving the acoustic device 11a. That is, a gain of the noise reduction signal output from the FB-NC filter 101b is adjusted by the power amplifier 103b to drive the acoustic device 11b. Note that the noise reduction signal output from the FB-NC filter 101b is partially split by a splitter or the like to be input to the loop canceller 109a.

Next, the loop cancellers 109a and 109b will be described. The loop cancellers 109a and 109b generate cancellation signals for reducing an influence associated with the formation of the figure-eight-shaped closed loop described with reference to FIG. 5. Specifically, the loop canceller 109a generates the cancellation signal for reducing the influence associated with the formation of the figure-eight-shaped closed loop on the acoustic signal output from the acoustic device 11a using the noise reduction signal output from the FB-NC filter 101b as an input. Similarly, the loop canceller 109b generates the cancellation signal for reducing the influence associated with the formation of the figure-eight-shaped closed loop on the acoustic signal output from the acoustic device 11b using the noise reduction signal output from the FB-NC filter 101a as an input. Note that the details of a process related to the generation of the cancellation signals by the loop cancellers 109a and 109b will be described below along with description of signal processing by the noise reduction system 1 according to the embodiment.

Note that the functional configuration of the above-described noise reduction system 1 is merely exemplary and the present disclosure is not necessarily limited to only the configuration illustrated in FIG. 6. As a specific example, at least one of the acoustic device 11a and 11b and the sound collection units 13a and 13b may be configured as an externally attached device. In addition, the FB-NC filter 101a, the power amplifier 103a, the microphone amplifier 105a, the subtractor 107a, and the loop canceller 109a and the FB-NC filter 101b, the power amplifier 103b, the microphone amplifier 105b, the subtractor 107b, and the loop canceller 109b may be installed in different devices. Note that a configuration including the FB-NC filter 101a, the subtractor 107a, and the loop canceller 109a or the FB-NC filter 101b, the subtractor 107b, and the loop canceller 109b is equivalent to an example of a "signal processing device."

The example of the functional configuration of the noise reduction system 1 according to the embodiment has been described above with reference to FIG. 6.

<3.2. Signal processing>

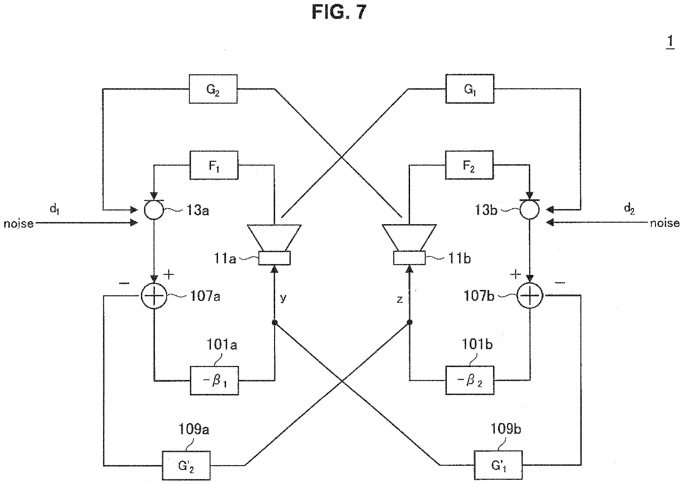

Next, an example of signal processing of the noise reduction system 1 according to the embodiment will be described with reference to FIG. 7. FIG. 7 is an exemplary block diagram focusing on the signal processing in the noise reduction system 1 according to the embodiment. Note that in the example illustrated in FIG. 7, the power amplifiers 103a and 103b and the microphone amplifiers 105a and 105b illustrated in FIG. 6 are omitted from the illustration to facilitate further understanding of characteristics of the signal processing in the noise reduction system 1 according to the embodiment.

In FIG. 7, reference numeral $F_1$ schematically denotes a transfer function indicating a spatial feature of a propagation environment in which an acoustic sound output from the acoustic device 11a arrives at the sound collection unit 13a. Similarly, reference numeral $F_2$ schematically denotes a transfer function indicating a spatial feature of a propagation environment in which an acoustic sound output from the acoustic device 11b arrives at the sound collection unit 13b. In addition, reference numeral $G_1$ schematically denotes a transfer function indicating a spatial feature of a propagation environment in which the acoustic sound output from the acoustic device 11a arrives at the sound collection unit 13b. Similarly, reference numeral $G_2$ schematically denotes a transfer function indicating a spatial feature of a propagation environment in which the acoustic sound output from the acoustic device 11b arrives at the sound collection unit 13a. In addition, reference numerals $d_1$ and $d_2$ schematically denote noise collected by the sound collection units 13a and 13b, respectively.

In addition, reference numerals $\beta_1$ and $\beta_2$ schematically denote filter coefficients for generating noise reduction signals by executing a noise reduction process on acoustic signals input by the FB-NC filters 101a and 10b. In addition, reference numerals $G'_1$ schematically denotes a filter coefficient used for the loop canceller 109b to generate a cancellation signal to be input to the subtractor 107b by executing a filtering process on the input noise reduction signal. Similarly, reference numerals $G'_2$ schematically denotes a filter coefficient used for the loop canceller 109a to generate a cancellation signal to be input to the subtractor 107a by executing a filtering process on the input noise reduction signal.

Here, y is an acoustic sound output from the acoustic device 11a and z is an acoustic sound output from the acoustic device 11b. Here, the acoustic sound y is equivalent to an acoustic sound output by driving the acoustic device 11a on the basis of the noise reduction signal from the FB-NC filter 101a. Similarly, the acoustic sound z is equivalent to an acoustic sound output by driving the acoustic device 11b on the basis of the noise reduction signal from the FB-NC filter 101b. At this time, the acoustic sound y is expressed in (Expression 2) below.

[Math. 2]

$$ y = \frac{-\beta_1(G_2 - G'_2)z - \beta_1 d_1}{1 + \beta_1 F_1} $$

$\cdot\ \cdot\ \cdot$(Expression 2)

Here, in (Expression 2) above, by setting a feature (that is, the filter coefficient $G'_2$) of the loop canceller 109a to substantially match the spatial feature $G_2$ (that is, $G'_2 = G_2$), it is possible to exclude an influence of the acoustic sound z output from the acoustic device 11b from the acoustic sound y output from the acoustic device 11a. Thus, it is possible to improve independency of the system of feedback including the system on the left ear side (that is, the system of feedback including the acoustic device 11a, the sound collection unit 13a, and the FB-NC filter 101a). That is, since the influence associated with the formation of the figure-eight-shaped closed loop is suppressed, an improvement in design easiness, an improvement in a noise reduction effect, or the like can be expected.

Note that in a case in which the system on the left ear side is focused on, the acoustic sound (in other words, the acoustic sound for reducing noise) output from the acoustic device 11a and collected by the sound collection unit 13a is equivalent to an example of a "first acoustic sound." In addition, the acoustic sound output from the acoustic device 11b and collected by the sound collection unit 13a is equivalent to an example of a "second acoustic sound." In addition, the propagation path (the propagation environment) between the acoustic device 11a and the sound collection unit 13a is equivalent to an example of a "first propagation path" and the propagation path (the propagation environment) between the acoustic device 11b and the sound collection unit 13a is equivalent to an example of a "second propagation path." In addition, the noise reduction signal for driving the acoustic device 11a is equivalent to an example of a "first noise reduction signal" and the noise reduction signal for driving the acoustic device 11b is equivalent to an example of a "second noise reduction signal."

In addition, in the foregoing description, the acoustic sound y output from the acoustic device 11a has been focused on, but an influence of the acoustic sound y output from the acoustic device 11a can also be excluded on the basis of a similar idea with regard to the acoustic sound z output from the acoustic device 11b.

The example of the signal processing of the noise reduction system 1 according to the embodiment has been described above with reference to FIG. 7.

<3.3. Installation positions of acoustic device and sound collection unit>

Next, conditions for installation positions of the acoustic devices 11 and the sound collection units 13 will be described in more detail. As described above, in the noise reduction system 1 according to the embodiment, an influence of noise is reduced through the noise reduction process based on the FB scheme. Therefore, it is more preferable to restrict the noise reduction effect to the vicinities of the sound collection units 13 and install the sound collection units 13 near the acoustic devices 11. That is, in the noise reduction system 1 according to the embodiment, the acoustic devices 11 and the sound collection units 13 are each preferably held near the ears (eardrums) of the hearer.

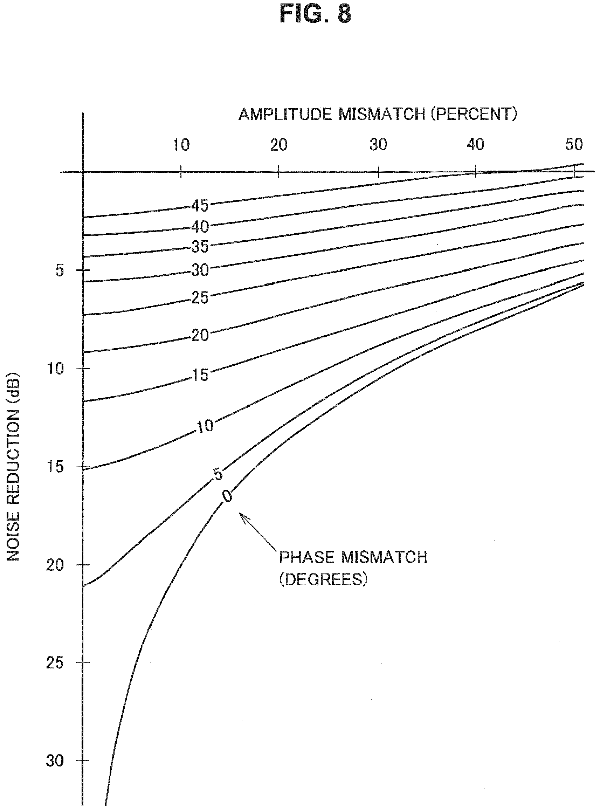

Here, conditions for a positional relation between the acoustic devices 11, the sound collection units 13, and the ears of the hearer for obtaining the noise reduction effect in a more preferred aspect will be examined in more detail with reference to FIGS. 8 to 10. As described above, in a case in which noise is reduced on the basis of the FB scheme, phase rotation caused by a time delay increases as a distance between the acoustic device 11 and the sound collection unit 13 is farther. Therefore, there is a tendency of difficulty in controlling the noise reduction process. In other words, by installing the acoustic device 11 and the sound collection unit 13 so that the phase rotation caused by the time delay is restricted to a predetermined value (threshold) or less, it is possible to obtain the noise reduction effect in the more preferred aspect.

For example, FIG. 8 is a diagram illustrating an example of a simulation result of a relation between the degree of phase mismatch and an effect of the noise reduction process. In FIG. 8, the horizontal axis represents the degree of amplitude mismatch by percentages and the vertical axis represents an effect (that is, a noise reduction amount) of the noise reduction process by a gain (dB). In addition, in FIG. 8, a deviation in a phase is indicated on a 5-deg basis in a range of 0 to 45 deg in the graph that shows features between the degree of amplitude mismatch due to the deviation in the phase and the effect of the noise reduction process. As understood from FIG. 8, in a case in which the deviation in the phase is 10 deg, a maximum of the effect of the noise reduction process is 15 dB even when the amplitude is fitted in any way. In addition, when the deviation in the phase exceeds 45 deg, it can be understood that it is difficult obtain the effect of the noise reduction process. From this viewpoint, it can be understood that the phase rotation caused by the time delay (that is, the phase rotation caused by a distance between the acoustic device 11 and the sound collection unit 13) is preferably suppressed at 45 deg or less.

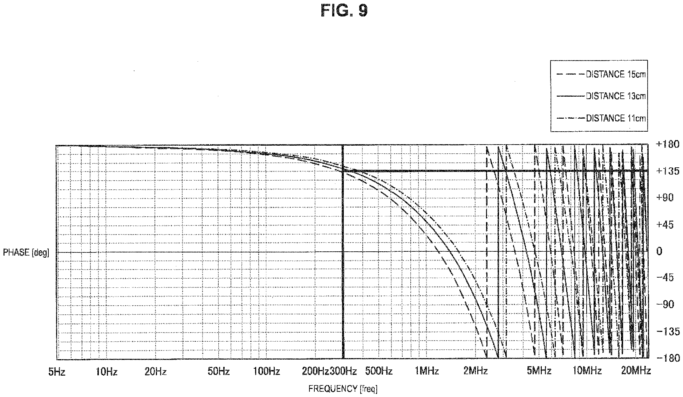

Next, a phase change in accordance with the distance between the acoustic device 11 and the sound collection unit 13 will be focused on. For example, FIG. 9 is a diagram illustrating an example of a simulation result related to a phase change in accordance with a distance between an acoustic device 11 and a sound collection unit 13. In FIG. 9, the horizontal axis represent a frequency of an acoustic sound propagating between the acoustic device 11 and the sound collection unit 13 and the vertical axis represents a phase of the acoustic sound. Note that in the example illustrated in FIG. 8, a simulation result of the phase change of the acoustic sound propagating between the acoustic device 11 and the sound collection unit 13 is indicated in each case in which the distance between the acoustic device 11 and the sound collection unit 13 is 11 cm, 13 cm, and 15 cm.

Here, in a case in which the phase rotation caused by the time delay is set to 45 deg or less and an upper limit of the frequency of the acoustic sound for reducing noise is set to 300 Hz, a limit of the distance between the acoustic device 11 and the sound collection unit 13 is 15 cm from the simulation result illustrated in FIG. 9.

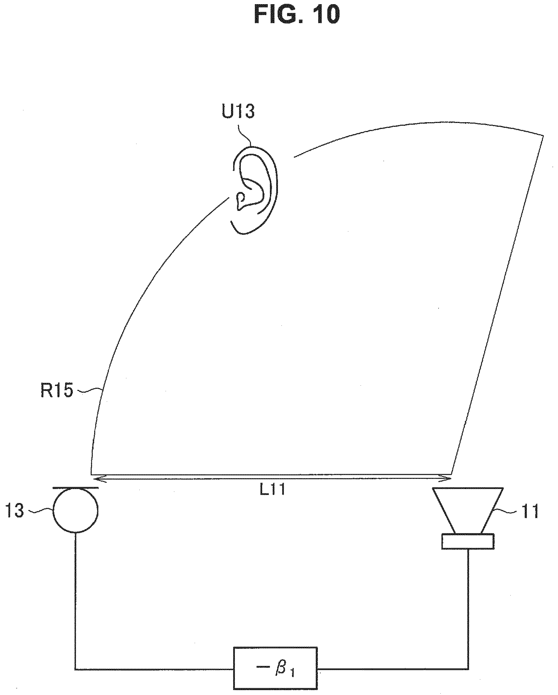

On the basis of the above, conditions of a positional relation among the acoustic device 11, the sound collection unit 13, and an ear of the hearer in order to obtain the noise reduction effect in a more preferred aspect will be described with reference to FIG. 10. FIG. 10 is an explanatory diagram illustrating conditions for installation positions of the acoustic device 11 and the sound collection unit 13. In FIG. 10, reference numeral L11 denotes a distance between the acoustic device 11 and the sound collection unit 13 forming a closed loop of feedback. Here, in a case in which the phase rotation caused by the time delay is set to 45 deg or less and an upper limit of the frequency of the acoustic sound for reducing noise is set to 300 Hz, a limit of the distance L11 is 15 cm, as described above. In addition, in a case in which an ear U13 of the hearer is guessed as a pseudo-sound collection unit, the ear U13 is preferably located inside a region R15 within a radius 15 cm centering on the acoustic device 11 in order to obtain a noise reduction effect similar to that near the sound collection unit 13 near the ear U13.

As described above, the acoustic device 11 and the sound collection unit 13 may each be installed with a positional relation in which the phase rotation at the position of each of the sound collection unit 13 and the ear U13 of the hearer in an acoustic sound for reducing noise output from the acoustic device 11 is 45 deg or less in both the sound collection unit 13 and the ear U13. More specifically, as illustrated in FIG. 10, the acoustic device 11 and the sound collection unit 13 may each be installed so that both the sound collection unit 13 and the ear U13 of the hearer are located within the predetermined distance L11 from the acoustic device 11. Note that, as described above, the distance L11 is decided in accordance with the upper limit of the frequency of the acoustic sound for reducing noise and a permissible amount of the phase rotation caused by the time delay. As a specific example, as described above, the limit of the distance L11 is 15 cm when the phase rotation caused by the time delay is set to 45 deg or less and the upper limit of the frequency of the acoustic sound for reducing noise is set to 300 Hz.

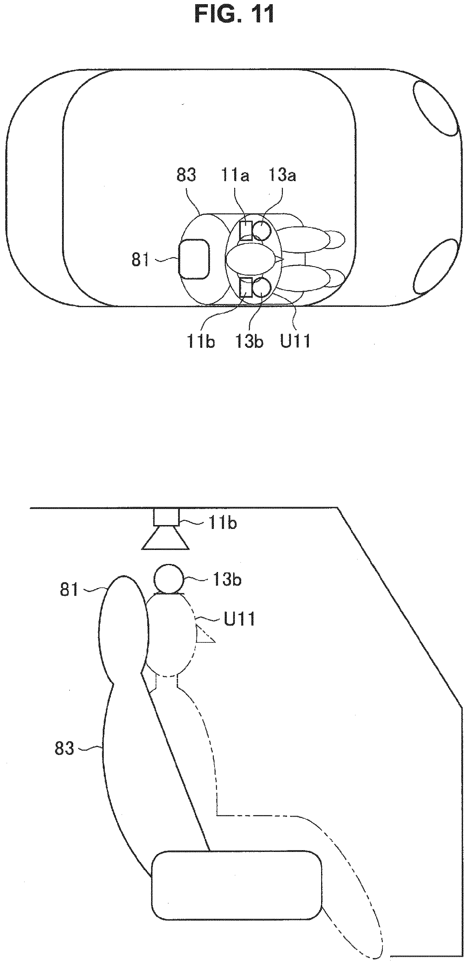

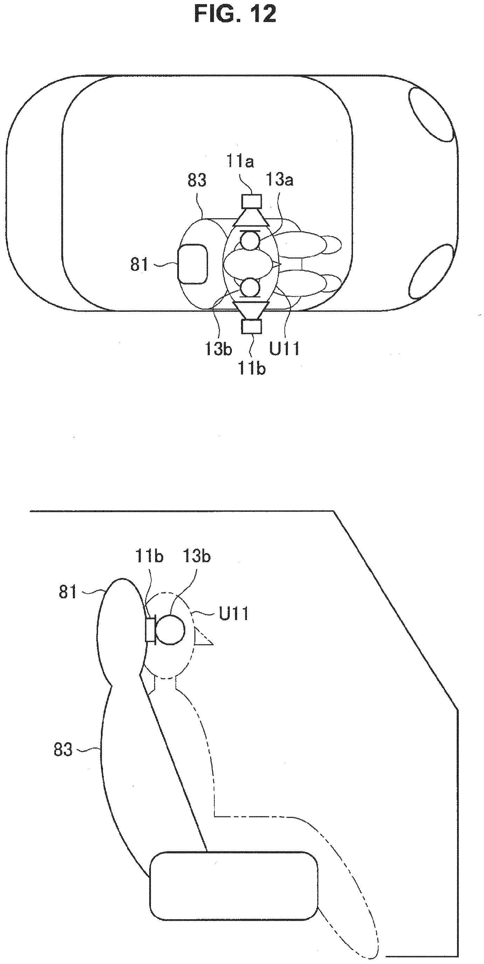

Note that the installation positions of the acoustic device 11 and the sound collection unit 13 are not particularly limited as long as the acoustic device 11 and the sound collection unit 13 are each installed so that the above-describe conditions are satisfied. For example, FIGS. 11 and 12 are explanatory diagrams illustrating an example of a schematic configuration of the noise reduction system according to the embodiment. Specifically, FIGS. 11 and 12 illustrate other examples of the installation positions of each acoustic device 11 and each sound collection unit 13 in the case in which the acoustic devices 11a and 11b and the sound collection units 13a and 13b are installed in the vehicle, as described with reference to FIGS. 1 and 2. Note that the upper drawings of FIGS. 11 and 12 schematically illustrate positional relations among the user U11, the acoustic devices 11a and 11b, and the sound collection units 13a and 13b when the seat 83 on which the user U11 sits is viewed vertically. In addition, the lower drawings of FIGS. 11 and 12 schematically illustrate positional relations among the user U11, the acoustic device 11b, and the sound collection unit 13b in the case in which the seat 83 is viewed from the right side in a traveling direction of the vehicle. Note that in the lower drawings of FIGS. 11 and 12, the acoustic device 11a and the sound collection unit 13a are omitted from the illustration to facilitate the configurations.

For example, in the example illustrated in FIG. 2, the acoustic devices 11a and 11b are each located rear the head of the user U11 and are installed to output sound acoustics frontward. In the example illustrated in FIG. 11, however, the acoustic devices 11a and 11b are each located on the upper side (for example, the ceiling of the vehicle) of the head of the user U11 and are installed to output acoustic sounds in the direction (that is, the lower side) of the head of the user U11. In this case, the sound collection units 13a and 13b may each be located near the right and left ears of the user U11 and may be installed to collect acoustic sounds arriving from the above.

In addition, in the example illustrated in FIG. 12, the acoustic devices 11a and 11b are each located in different directions on the left and right when the head of the user U11 is a reference, and are installed t output acoustic sounds in a direction of the head of the user U11 (that is, a direction from the outside to the inside). In this case, the sound collection units 13a and 13b may be located near the left and right ears of the user U11 and may be installed to collect acoustic sounds arriving from the left and right of the head of the user U11.

The conditions for the installation positions of the acoustic devices 11 and the sound collection units 13 have been described above in more detail with reference to FIGS. 8 to 12.

<<4. Modification examples>>

Next, modification examples of the noise reduction system 1 according to the embodiment will be described.

<4.1. Modification Example 1: example of case in which features of loop cancellers are adaptively controlled>

First, an example of a case in which features of the above-described loop cancellers 109a and 109b are adaptively controlled in response to a change in a feature of an environment in which the acoustic sounds output from the acoustic devices 11a and 11b propagate will be described as Modification Example 1.

(Functional configuration)

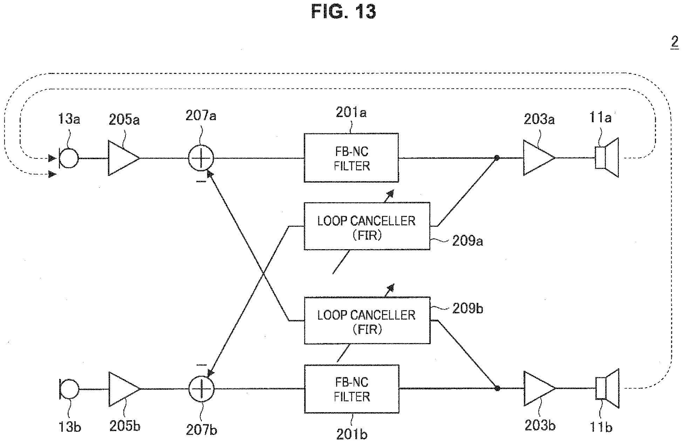

For example, FIG. 13 is an explanatory diagram illustrating an example of a schematic configuration of a noise reduction system according to Modification Example 1. Note that in the description, the noise reduction system illustrated in FIG. 13 is also referred to as a "noise reduction system 2" to distinguish the noise reduction system from the above-described noise reduction system 1.

As illustrated in FIG. 13, the noise reduction system 2 is different from the noise reduction system 1 described with reference to FIG. 6 in configurations of loop cancellers 209a and 209b. That is, acoustic devices 11a and 11b and sound collection units 13a and 13b illustrated in FIG. 13 are equivalent to the acoustic devices 11a and 11b and the sound collection units 13a and 13b, respectively, in the noise reduction system 1 illustrated in FIG. 6. Similarly, FB-NC filters 201a and 201b, power amplifiers 203a and 203b, microphone amplifiers 205a and 205b, and subtractors 207a and 207 are equivalent to the FB-NC filters 101a and 101b, the power amplifiers 103a and 103b, the microphone amplifiers 105a and 105b, and the subtractors 107a and 107, respectively, in the noise reduction system 1 illustrated in FIG. 6. Accordingly, in the description, the configuration of the noise reduction system 2, particularly, the differences from the above-described noise reduction system 1, will be focused on and the detailed description of substantially the same portions will be omitted.

In the noise reduction system 2 illustrated in FIG. 13, for example, adaptive filters such as finite impulse response (FIR) filters are applied as the loop cancellers 209a and 209b. In this configuration, for example, features of the loop cancellers 209a and 209b can be changed in accordance with a change in an environment in which acoustic sounds output from the acoustic devices 11a and 11b propagate, a change in the positions of the acoustic devices 11a and 11b with respect to the left and right ears of the user, or the like.

On the other hand, in the noise reduction system 2 illustrated in FIG. 13, stability of an operation deteriorates in accordance with the features of adaptive filters which are used as the loop cancellers 209a and 209b in some cases in a case in which correlation between the acoustic sounds output from the acoustic devices 11a and 11b is high. In addition, because of the features of adaptive filters such as FIR filters, the number of taps of the filter increases and furthermore calculation resources also increase in a case in which a noise reduction target is low-frequency noise.

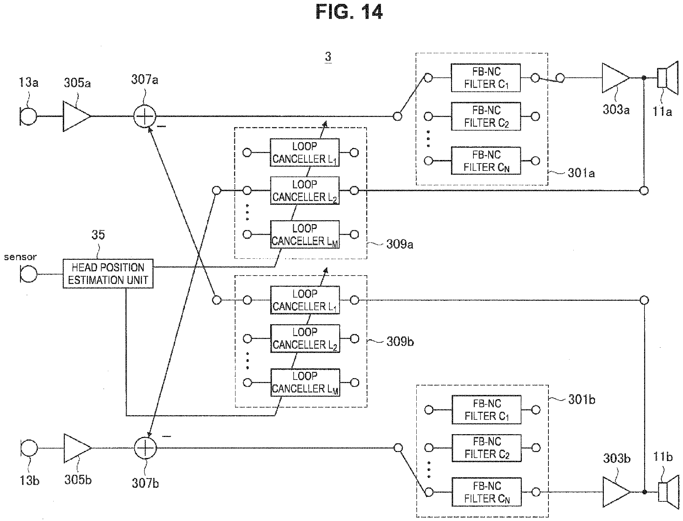

Accordingly, a configuration in which a plurality of filters with different features are provided in advance and a filter to be used as a loop canceller is selected quasi-adaptively among the plurality of filters in accordance with an environment or a situation is proposed as another example of a schematic configuration of the noise reduction system according to Modification Example 1. For example, FIG. 14 is an explanatory diagram illustrating another example of a schematic configuration of the noise reduction system according to Modification Example 1. Note that in the description, the noise reduction system illustrated in FIG. 14 is also referred to as a "noise reduction system 3" to distinguish the noise reduction system from the above-described noise reduction systems 1 and 2.

As illustrated in FIG. 14, the noise reduction system 3 is different from the noise reduction system 1 described with reference to FIG. 6 in that configurations of filter banks 301a, 301b, 309a, and 309b and a head position estimation unit 35 are included. That is, acoustic devices 11a and 11b and sound collection units 13a and 13b illustrated in FIG. 14 are equivalent to the acoustic devices 11a and 11b and the sound collection units 13a and 13b, respectively, in the noise reduction system 1 illustrated in FIG. 6. Similarly, power amplifiers 303a and 303b, microphone amplifiers 305a and 305b, and subtractors 307a and 307 are equivalent to the FB-NC filters 101a and 101b, the power amplifiers 103a and 103b, the microphone amplifiers 105a and 105b, and the subtractors 107a and 107, respectively, in the noise reduction system 1 illustrated in FIG. 6. Accordingly, in the description, the configuration of the noise reduction system 3, particularly, the differences from the above-described noise reduction system 1, will be focused on and the detailed description of substantially the same portions will be omitted.

The filter banks 301a and 301b correspond to the FB-NC filters 101a and 101b in the noise reduction system 1 described with reference to FIG. 6. Note that since the filter banks 301a and 301b have the same configuration, the configuration of the filter bank 301a will be described herein and the detailed description of the filter bank 301b will be omitted. As illustrated in FIG. 14, the filter bank 301a includes a plurality of FB-NC filters $C_1$ to $C_N$ with different features and the FB-NC filters $C_1$ to $C_N$ can be selectively switched. Note that the plurality of FB-NC filters $C_1$ to $C_N$ each have the same configuration as the above-described FB-NC filters 101a and 101b except for a difference in the feature. In this configuration, in the filter bank 301a, any of the FB-NC filters $C_1$ to $C_N$ can be selectively applied in accordance with a spatial feature of a propagation environment in which an acoustic sound output from the acoustic device 11a arrives at the sound collection unit 13a. Note that each of the FB-NC filters $C_1$ to $C_N$ may be set in accordance with an assumed use scene of the noise reduction system 3 by an experiment or the like carried out in advance. Specifically, the FB-NC filters corresponding to respective use scenes may be set by measuring the spatial feature between the acoustic device 11a and the sound collection unit 13a in the respective use scenes in advance and calculating filter coefficients on the basis of a measurement result of the spatial feature.

In addition, the filter banks 309a and 309b correspond to the loop cancellers 109a and 109b in the noise reduction system 1 described with reference to FIG. 6. Note that since the filter banks 309a and 309b have the same configuration, the configuration of the filter bank 309a will be described herein and the detailed description of the filter bank 309b will be omitted. As illustrated in FIG. 14, the filter banks 309a include a plurality of loop cancellers $L_1$ to $L_M$ with different features and the loop cancellers $L_1$ to $L_M$ can be selectively switched. Note that the plurality of loop cancellers $L_1$ to $L_M$ each have the same configuration as the above-described loop cancellers 109a and 109b except for a difference in the feature. In this configuration, in the filter bank 309a, for example, any of the loop cancellers $L_1$ to $L_M$ can be selectively applied in accordance with a spatial feature of a propagation environment in which an acoustic sound output from the acoustic device 11a arrives at the sound collection unit 13b. Note that each of the loop cancellers $L_1$ to $L_M$ may be set in accordance with an assumed use scene of the noise reduction system 3 by an experiment or the like carried out in advance. Specifically, the loop cancellers corresponding to respective use scenes may be set by measuring the spatial feature between the acoustic device 11a and the sound collection unit 13b in the respective use scenes in advance and calculating filter coefficients on the basis of a measurement result of the spatial feature.

Note that in the noise reduction system 3 illustrated in FIG. 14, a position of the head of the user is detected and the loop canceller to be applied to signal processing for noise reduction is selected among the loop cancellers $L_1$ to $L_M$ in each of the filter banks 309a and 309b in accordance with the detection result. For example, the head position estimation unit 35 is configured to estimate a position of the head of the user on the basis of a detection result of various sensors or the like. The head position estimation unit 35 controls switching between the loop cancellers in the filter banks 309a and 309b on the basis of an estimation result of the position of the head of the user. Note that a more detailed configuration for estimating the position of the head of the user will be described separately below by giving a specific example.

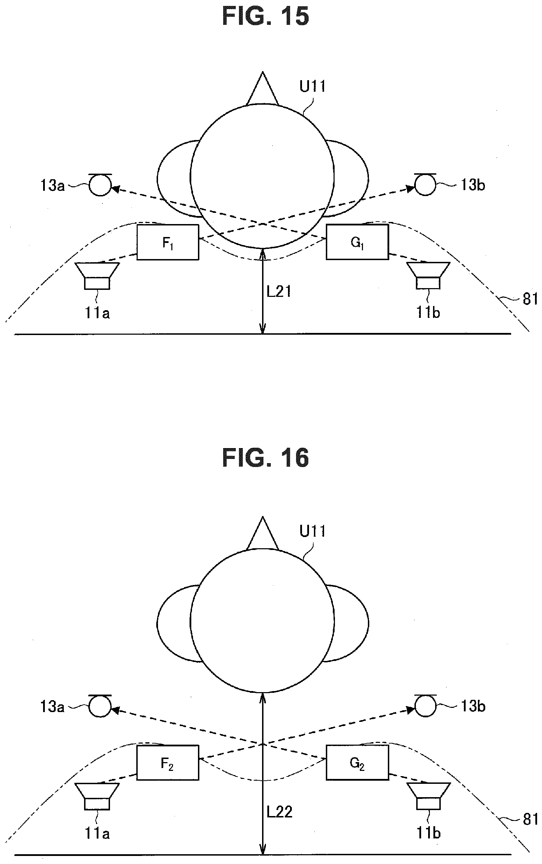

Here, a change in a propagation environment of an acoustic sound output from each of the acoustic devices 11a and 11b in accordance with the position of the head of the user will be described with reference to FIGS. 15 and 16. For example, FIG. 15 illustrates an example of a case in which the head of the user U11 is close to the headrest 81 in which the acoustic devices 11a and 11b are installed. In addition, FIG. 16 illustrates an example of a case in which the head of the user U11 is far from the headrest 81 in which the acoustic devices 11a and 11b are installed. Note that in the examples illustrated in FIGS. 15 and 16, the position of the head of the user U11 is estimated by measuring a distance between a predetermined position of the headrest 81 and the head of the user U11. That is, reference numeral L21 in FIG. 15 and reference numeral L23 in FIG. 16 denote distances between the predetermined position of the headrest 81 and the head of the user U11. Note that the distance L21 illustrated in FIG. 15 and the distance L23 illustrated in FIG. 16 have a relation of L23 > L21.

For example, in the example of the case in which the head of the user U11 is close to the headrest 81, as illustrated in FIG. 15, the head is interposed between the acoustic device 11a and the sound collection unit 13b. Note that F1 is assumed to a transfer function of the propagation environment between the acoustic device 11a and the sound collection unit 13b. In addition, in the example of the case in which the head of the user U11 is far from the headrest 81, as illustrated in FIG. 16, the head is not interposed between the acoustic device 11a and the sound collection unit 13b. Note that F2 is assumed to a transfer function of the propagation environment between the acoustic device 11a and the sound collection unit 13b.

As understood from comparison between FIGS. 15 and 16, the propagation environment between the acoustic device 11a and the sound collection unit 13b differs in accordance with the position of the head of the user U11. Therefore, in the example illustrated in FIG. 15, for example, the noise reduction system 3 illustrated in FIG. 14, the loop canceller in accordance with the transfer function F1 is selected. In addition, in the example illustrated in FIG. 16, the noise reduction system 3 selects the loop canceller in accordance with the transfer function F2.

The same applies to a relation between the acoustic device 11b and the sound collection unit 13a. For example, in the example illustrated in FIG. 15, when $G_1$ is a transfer function of the propagation environment between the acoustic device 11b and the sound collection unit 13a, the noise reduction system 3 selects the loop canceller in accordance with the transfer function $G_1$. Similarly, in the example illustrated in FIG. 16, when $G_2$ is a transfer function of the propagation environment between the acoustic device 11b and the sound collection unit 13a, the noise reduction system 3 selects the loop canceller in accordance with the transfer function $G_2$.

In addition, the example in which the loop canceller is selected in accordance with the position of the head of the user U11 has been described. The same applies to the NC-FB filter. That is, the head position estimation unit 35 may control the switching between the NC-FB filters in the filter banks 301a and 301b on the basis of an estimation result of the head of the user.

In addition, as described above, the change in the spatial feature between the acoustic device 11 and the sound collection unit 13 in accordance with the position of the head of the user U11 has been mainly focused on. However, a factor changing the spatial feature between the acoustic device 11 and the sound collection unit 13 is not necessarily limited to only the position of the head of the user U11. For example, in a case in which a space inside a vehicle is assumed, the spatial feature between the acoustic device 11 and the sound collection unit 13 is also changed in accordance with an opened or closed state of a window or a door. Therefore, the head position estimation unit 35 may select the loop canceller or the NC-FB filter, for example, by acquiring information indicating the opened or closed state of a window or a door via a controller area network (CAN) and using the acquired information along with an estimation result of the position of the head.

In addition, when the noise reduction process in accordance with the spatial feature between the acoustic device 11 and the sound collection unit 13 can be realized, the configuration of each of the filter banks 301a, 301b, 309a, and 309b is not limited to the configuration in which the plurality of filters described above is selectively switched. Specifically, at least one of a gain and a phase of an input acoustic signal may be able to be controlled in accordance with the spatial feature between the acoustic device 11 and the sound collection unit 13. Therefore, for example, a configuration in which a gain can be controlled, such as a variable gain amplifier or a variable resistor may be applied as at least one of the filter banks 301a, 301b, 309a, and 309b. Accordingly, in the present disclosure, a process of controlling at least one of the gain and the phase of an input signal is assumed to be indicated in a case in which a "filtering process" is called. In addition, in a case in which the spatial feature between the acoustic device 11a and the sound collection unit 13a and between the acoustic device 11b and the sound collection unit 13b is stable, the filter banks 301a and 301b may be switched and the above-described NC-FB filters 101a and 101b may be installed.

(Signal processing)

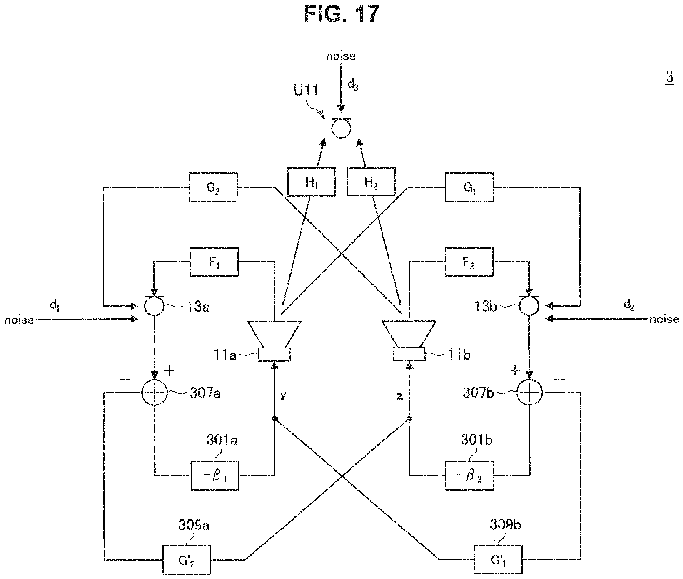

Next, an example of signal processing by the noise reduction system 3 according to Modification Example 1 will be described with reference to FIG. 17. FIG. 17 is an exemplary block diagram focusing on signal processing of the noise reduction system 3 according to Modification Example 1. Note that in the example illustrated in FIG. 17, the power amplifiers 303a and 303b and the microphone amplifiers 305a and 305b illustrated in FIG. 14 are omitted from the illustration to facilitate further understanding of the characteristics of the signal processing in the noise reduction system 3 according to Modification Example 1.

In FIG. 17, reference numeral $H_1$ schematically denotes a transfer function indicating a spatial feature of a propagation environment in which an acoustic sound output from the acoustic device 11a arrives at the head of the user U11. Note that the head (ears) of the user U11 is guessed as a sound collection unit, as schematically illustrated in FIG. 17. In addition, reference numeral $H_2$ schematically denotes a transfer function indicating a spatial feature of a propagation environment in which an acoustic sound output from the acoustic device 11b arrives at the head of the user U11. Note that for the transfer functions $H_1$ and $H_2$, the spatial feature in accordance with the position of the head of the user U11 may be measured in advance and may be calculated in advance on the basis of a measurement result of the spatial feature. In addition, reference numeral $d_3$ schematically denotes noise heard by the user U11. Note that in FIG. 17, reference numerals $F_1$, $F_2$, $G_1$, $G_2$, $\beta_1$, $\beta_2$, $G'_1$, $G'_2$, $d_1$, and $d_2$ each denote content similar to the content of the example illustrated in FIG. 7, the detailed description thereof will be omitted.

Here, since a sound pressure at the position of the head of the user U11 can be obtained by adding the acoustic sounds y and z output from the acoustic devices 11a and 11b to the noise $d_3$, the sound pressure is expressed in a conditional expression shown in (Expression 3) below.

[Math. 3]

$$yH_1 + zH_2 + d_3$$

$$= \frac{-\beta_1(1 + \beta_2 F_2)H_1 d_1 - \beta_1(1 + \beta_1 F_1)H_2 d_2}{(1 + \beta_1 F_1)(1 + \beta_2 F_2)} + d_3$$

$$= \frac{-\beta_1 H_1 d_1}{(1 + \beta_1 F_1)} + \frac{-\beta_2 H_2 d_2}{(1 + \beta_2 F_2)} + d_3$$

$$\cdots \text{(Expression 3)}$$

Note that information indicating correlation between the noise $d_1$ and the noise $d_2$ collected by the sound collection units 13a and 13b and the noise $d_3$ at a point at which a reduction in the noise is realized (that is, an assumed position of the head of the user U11) may be calculated on the basis of, for example, a result of advance measurement, simulation, or the like and may be stored in a desired recording unit (for example, a database). Thus, for example, by configuring the noise reduction system 3 so that the NC-FB filter is selected quasi-adaptively, it is possible to expect an improvement in the noise reduction effect at the position of the head of the user U11. Note that, for a relationship among the noise $d_1$, the noise $d_2$, and the noise $d_3$, it is more preferable to contain an amplitude difference and a phase difference by a stationary wave, for example, in consideration of the fact that the space inside the vehicle is a closed space. The information may be calculated, for example, on the basis of the result of the advance measurement, the simulation, or the like and may be stored in the desired recording unit. In addition, as another example, the information may be estimated using a sound pressure estimation technology such as a so-called virtual microphone.

(Estimation of position of head)

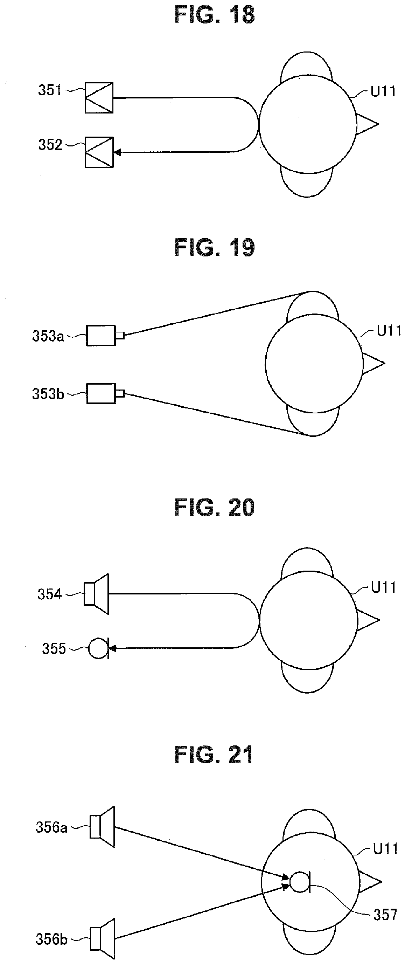

Next, examples of configurations and methods for estimating the position of the head of the user U11 will be described with reference to FIGS. 18 to 21. FIGS. 18 to 21 are explanatory diagrams illustrating examples of configurations and methods for estimating a position of the head of the user U11.

For example, in the example illustrated in FIG. 18, by radiating light from a light source 351 such as a laser to the head of the user U11 and causing a light-receiving element 352 to receive reflected light, a distance between a predetermined reference position (for example the position of the headrest 81) and the head is estimated on the basis of a light reception result. Note that as a method of measuring a distance to the head of the user U11 on the basis of the light reception result of the reflected light from the head by the light-receiving element 352, for example, an estimation method based on a so-called triangulation type or time flight scheme can be exemplified.

In addition, in the example illustrated in FIG. 19, by causing imaging units 353a and 353b such as camera modules to capture an image of the head of the user U11 and executing image analysis on the captured image, a distance between a predetermined reference position and the head is estimated. Note that the number of imaging units is not particularly limited and the kinds of imaging units are not limited. For example, the distance to the head of the user U11 may be estimated on the basis of information obtained on the basis of measurement of a single eye. In addition, as another example, by using a double-eye camera as an imaging unit, the distance to the head of the user U11 may be estimated on the basis of parallax between images captured by the double-eye camera.

In addition, in the example illustrated in FIG. 20, by releasing an ultrasonic wave from an ultrasonic speaker 354 and causing a sound collection unit 355 to collect the ultrasonic wave, a distance between a predetermined reference position and the head is estimated on the basis of a sound collection result of the ultrasonic wave. For example, in FIG. 20, by configuring a so-called reflective type and causing the sound collection unit 355 to collect an ultrasonic wave (that is, a reflected wave) released from the ultrasonic speaker 354 and reflected from the head of the user U11, the distance between the predetermined reference position to the head is estimated on the basis of a sound collection result of the reflected wave. In addition, as another example, the distance to the head of the user U11 may be estimated on the basis of a so-called transmission scheme. Here, the transmission scheme is a scheme of estimating the distance from attenuation of an ultrasonic beam between a transmitter and a receiver or a shielding amount.

In addition, in the example illustrated in FIG. 21, measurement signals such as white noise or a time stretched pulse (TSP) are output from the acoustic devices 356a and 356b provided in the headrest 81 and the measurement signals are collected by a sound collection unit 357 provided in a device worn on the user U11. In this configuration, the position of the head of the user U11 can be estimated with a delay time until the measurement signals are collected by the sound collection unit 357. Note that as an example of the device in which the sound collection unit 357 is provided, for example, a head-mounted wearable device such s a glasses-type display device can be exemplified. In addition, as the scheme illustrated in FIG. 21, information restricted to the position of the head at an estimation (estimation) timing is measured. Therefore, for example, information associated with movement of the head from an initial position may be obtained, for example, by combining a detection result by any of various sensors such as a gyro sensor and tracking the position of the head.

The example of the configuration in which the features of the above-described loop cancellers 109a and 109b are adaptively controlled in accordance with a change of the feature of the environment in which the acoustic sound output from each of the acoustic devices 11a and 11b propagates has been described as Modification Example 1.

<4.2. Modification Example 2: example of control related to switching between filters>

Next, an example of control in a case in which the FB-NC filters or the loop cancellers are switched in the noise reduction system 3 described with reference to FIG. 14 will be described with reference to FIG. 14 as Modification Example 2.

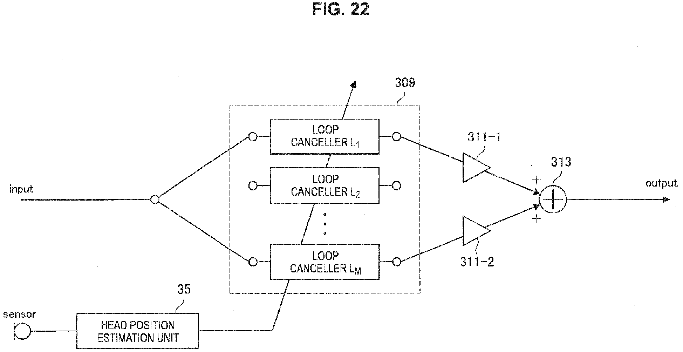

For example, FIG. 22 is an explanatory diagram illustrating an overview of the noise reduction system according to Modification Example 2 and illustrates an example of a case in which switching between the loop cancellers in the filter bank 309 is controlled on the basis of an estimation result by the head position estimation unit 35. Note that in the description, for example, a case in which the loop canceller $L_M$ is switched from the loop canceller $L_1$ will be mainly described.

In the example illustrated in FIG. 22, when the loop canceller is switched, a signal output from the loop canceller $L_1$ which is a switching source is continuously changed to a signal to be output from the loop canceller $L_M$ which is a switching destination on the basis of control called so-called cross-fade.

Specifically, in a case in which the loop canceller in the filter bank 309 is switched, both the loop canceller $L_1$ which is a switching source and the loop canceller $L_M$ which is a switching destination are connected to both an input side and an output side. In addition, at this time, volumes of signals output from the loop cancellers $L_1$ and $L_M$ are controlled by faders 311-1 and 311-2 and are added by an adder 313 to be output.

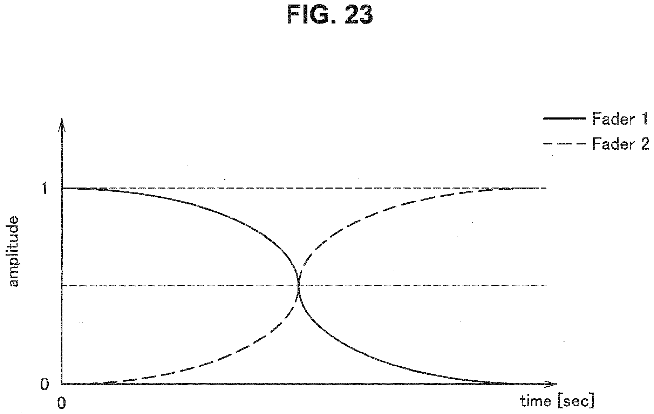

For example, FIG. 23 is an explanatory diagram illustrating cross-fade and illustrates an example of control of the volume by the faders 311-1 and 311-2. In FIG. 23, the horizontal axis represents a time and the vertical axis represents magnitude (amplitude) of the volume of each fader. In addition, in FIG. 23, data indicated by "Fader1" corresponds to the fader 311-1 connected to the loop canceller $L_1$ which is the switching source. In addition, data indicated by "Fader2" corresponds to the fader 311-2 connected to the loop canceller $L_M$ which is the switching destination.

As illustrated in FIGS. 22 and 23, in a case in which the loop canceller $L_1$ is switched to the loop canceller $L_M$, the volume of the fader 311-1 connected to the loop canceller $L_1$ continuously decreases from 1 of an initial state over time and is finally controlled to 0. In addition, the volume of the fader 311-2 connected to the loop canceller $L_M$ continuously increases from 0 of an initial state over time and is finally controlled to 1. Through the control, a signal output from the loop canceller $L_1$ which is the switching source is caused to continuously transition to a signal to be output from the loop canceller $L_M$ which is the switching destination.

Note that in the foregoing description, the case in which the switching between the loop cancellers in the filter bank 309 is controlled has been focused on, but the same applies to a case in which the NC-FB filters in the filter bank 301 are switched.

The example of the control in the case in which the FB-NC filters or the loop cancellers are switched in the above-described noise reduction system 3 has been described with reference to FIGS. 22 and 23 as Modification Example 2.

<4.3. Modification Example 3: example of case in which number of systems of feedback is 3 or more.>

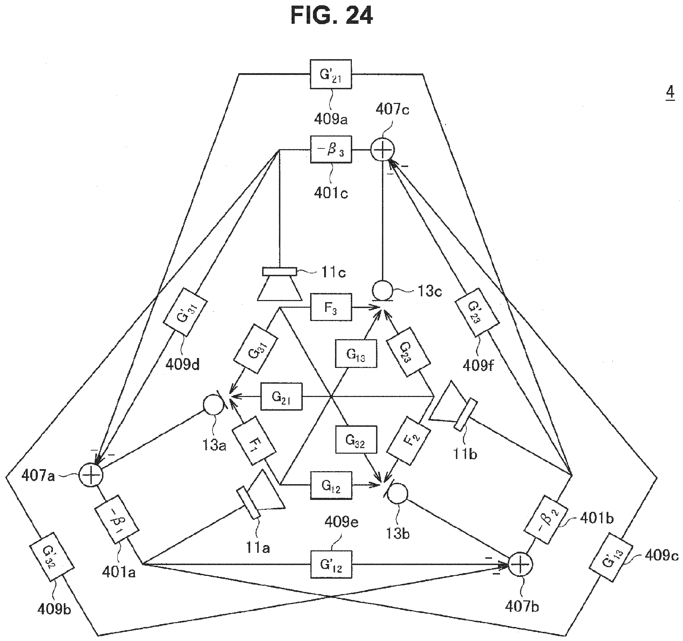

Next, an example of a configuration of a noise reduction system in a case in which 3 or more systems of feedback reducing noise are provided has been described as Modification Example 3. The example of the case in which the system of feedback reducing noise near the left ear of the user and the system of feedback reducing noise near the right ear of the user are provided has been mainly described above. On the other hand, the number of systems of feedback reducing noise is not limited to 2 described above, but 3 or more systems of feedback may be provided. For example, FIG. 24 is an explanatory diagram illustrating a noise reduction system according to Modification Example 3 and is a block diagram focusing on signal processing of the noise reduction system. Note that in the following description, the noise reduction system illustrated in FIG. 24 is also referred to as a "noise reduction system 4" to distinguish the noise reduction system from the noise reduction systems according to the above-described embodiments and modification examples. Note that in the description, in a case in which a "system of feedback" is described, the system of feedback indicates a system that forms a closed loop of feedback for a noise reduction process.

As illustrated in FIG. 24, the noise reduction system 4 includes acoustic devices 11a to 11c, sound collection units 13a to 13c, NC-FB filters 401a to 401c, subtractors 407a to 407c, and loop cancellers 409a to 409f. Note that power amplifiers and microphone amplifiers are omitted from the illustration to facilitate further understanding of features of signal processing in the noise reduction system 4 according to Modification Example 3. In addition, the acoustic device 11a, the sound collection unit 13a, and the NC-FB filter 401a form a system of feedback. Similarly, the acoustic device 11b, the sound collection unit 13b, and the NC-FB filter 401b, and the acoustic device 11c, the sound collection unit 13c, and the NC-FB filter 401c each form systems of feedback.

Reference numerals $F_1$ to $F_3$ schematically denote transfer functions of propagation environments in which an acoustic sound output from each acoustic device 11 arrives at the sound collection unit 13 forming the system of feedback along with the acoustic device 11. As a specific example, the transfer function $F_3$ denotes the transfer function of the propagation environment between the acoustic device 11c and the sound collection unit 13c.

Reference numerals $G_{12}$, $G_{13}$, $G_{21}$, $G_{23}$, $G_{31}$, and $G_{32}$ schematically denote transfer functions of propagation environments in which an acoustic sound output from each acoustic device 11 arrives at the other sound collection units 13 different from the sound collection unit 13 forming the system of feedback along with the acoustic device 11. Specifically, the transfer function $G_{12}$ indicates a transfer function of a propagation environment between the acoustic device 11a and the sound collection unit 13b, and the transfer function $G_{13}$ indicates a transfer function of a propagation environment between the acoustic device 11a and the sound collection unit 13c. In addition, the transfer function $G_{21}$ indicates a transfer function of a propagation environment between the acoustic device 11b and the sound collection unit 13a, and transfer function $G_{23}$ indicates a transfer function of a propagation environment between the acoustic device 11b and the sound collection unit 13c. In addition, the transfer function $G_{31}$ indicates a transfer function of a propagation environment between the acoustic device 11c and the sound collection unit 13a, and transfer function $G_{32}$ indicates a transfer function of a propagation environment between the acoustic device 11c and the sound collection unit 13b.

Reference numerals $\beta_1$ to $\beta_3$ schematically illustrate filter coefficients used for each of the FB-NC filters 401a to 401c to generate the above-described noise reduction signal. In addition, reference numerals $G'_{12}$, $G'_{13}$, $G'_{21}$, $G'_{23}$, $G'_{31}$, and $G'_{32}$ schematically denote filter coefficients used for each of the loop cancellers 409e, 409c, 409a, 409f, 409d, and 409b to generate the above-described cancellation signal.

For example, an acoustic sound output from the acoustic device 11a is collected by the sound collection unit 13a and an acoustic signal based on the sound collection result is input to the subtractor 407a. In addition, the cancellation signal output from each of the loop cancellers 409a and 409d is input to the subtractor 407a. The subtractor 407a subtracts the cancellation signal output from each of the loop cancellers 409b and 409d from the acoustic signal based on the sound collection result by the sound collection unit 13a and inputs an acoustic signal obtained as a subtraction result to the FB-NC filter 401a. The FB-NC filter 401a generates a noise reduction signal by executing the noise reduction process on the input acoustic signal in accordance with the feature (the transfer function F1) of the propagation environment between the acoustic device 11a and the sound collection unit 13a and outputs the noise reduction signal as a driving signal for driving the acoustic device 11a. In addition, the noise reduction signal output from the FB-NC filter 401a is partially split by a splitter or the like to be input to each of the loop cancellers 409c and 409e.

In addition, an acoustic sound output from the acoustic device 11b is collected by the sound collection unit 13b and an acoustic signal based on the sound collection result is input to the subtractor 407b. In addition, the cancellation signal output from each of the loop cancellers 409b and 409e is input to the subtractor 407b. The subtractor 407b subtracts the cancellation signal output from each of the loop cancellers 409b and 409e from the acoustic signal based on the sound collection result by the sound collection unit 13b and inputs an acoustic signal obtained as a subtraction result to the FB-NC filter 401b. The FB-NC filter 401b generates a noise reduction signal by executing the noise reduction process on the input acoustic signal in accordance with the feature (the transfer function F2) of the propagation environment between the acoustic device 11b and the sound collection unit 13b and outputs the noise reduction signal as a driving signal for driving the acoustic device 11b. In addition, the noise reduction signal output from the FB-NC filter 401b is partially split by a splitter or the like to be input to each of the loop cancellers 409a and 409f.

Similarly, an acoustic sound output from the acoustic device 11c is collected by the sound collection unit 13c and an acoustic signal based on the sound collection result is input to the subtractor 407c. In addition, the cancellation signal output from each of the loop cancellers 409c and 409f is input to the subtractor 407c. The subtractor 407c subtracts the cancellation signal output from each of the loop cancellers 409c and 409f from the acoustic signal based on the sound collection result by the sound collection unit 13c and inputs an acoustic signal obtained as a subtraction result to the FB-NC filter 401c. The FB-NC filter 401c generates a noise reduction signal by executing the noise reduction process on the input acoustic signal in accordance with the feature (the transfer function F3) of the propagation environment between the acoustic device 11c and the sound collection unit 13c and outputs the noise reduction signal as a driving signal for driving the acoustic device 11c. In addition, the noise reduction signal output from the FB-NC filter 401c is partially split by a splitter or the like to be input to each of the loop cancellers 409b and 409d.

Here, the acoustic sound output from the acoustic device 11a will be focused on. In this case, the feature (the transfer function $G'_{21}$) of the loop canceller 409a is set to substantially match the spatial feature $G_{21}$ and the feature (the transfer function $G'_{31}$) of the loop canceller 409d is set to substantially match the spatial feature $G_{31}$. In this configuration, it is possible to exclude an influence of the acoustic sound output from each of the acoustic devices 11b and 11c from the acoustic sound output from the acoustic device 11a. Therefore, it is possible to improve independency of the system of feedback formed by the acoustic device 11a, the sound collection unit 13a, and the NC-FB filter 401a.

Here, the acoustic sound output from the acoustic device 11b will be focused on. In this case, the feature (the transfer function $G'_{32}$) of the loop canceller 409b is set to substantially match the spatial feature $G_{32}$ and the feature (the transfer function $G'_{12}$) of the loop canceller 409e is set to substantially match the spatial feature $G_{12}$. In this configuration, it is possible to exclude an influence of the acoustic sound output from each of the acoustic devices 11a and 11c from the acoustic sound output from the acoustic device 11b. Therefore, it is possible to improve independency of the system of feedback formed by the acoustic device 11b, the sound collection unit 13b, and the NC-FB filter 401b.

Similarly, the acoustic sound output from the acoustic device 11c will be focused on. In this case, the feature (the transfer function $G'_{13}$) of the loop canceller 409c is set to substantially match the spatial feature $G_{13}$ and the feature (the transfer function $G'_{23}$) of the loop canceller 409f is set to substantially match the spatial feature $G_{23}$. In this configuration, it is possible to exclude an influence of the acoustic sound output from each of the acoustic devices 11a and 11b from the acoustic sound output from the acoustic device 11c. Therefore, it is possible to improve independency of the system of feedback formed by the acoustic device 11c, the sound collection unit 13c, and the NC-FB filter 401c.

Note that the example of the case in which the number of systems of feedback is 3 has been described above. Even in a case in which the number of systems of feedback is 4 or more, the noise reduction system may be configured on the basis of the same idea. That is, a loop canceller that generates a cancellation signal in accordance with a feature of a propagation environment may be provided in each of the propagation environments between the plurality of acoustic devices 11 and the plurality of sound collection units 13.

In addition, in a case in which 3 or more systems of feedback are provided, at least two or more of the plurality of systems of feedback may be selectively caused to be operated. As a specific example, the plurality of systems of feedback are assumed to be provided so that 3 or more acoustic devices 11 are disposed around the user. In this case, for example, by causing the systems of feedback reducing noise to operate near the left and right ears of a user in accordance with a detection result of a position of the head of the user, operations of the other systems of feedback may be caused to stop.

The example of the configuration of the noise reduction system in a case in which 3 or more systems of feedback reducing noise are provided has been described with reference to FIG. 24 as Modification Example 3.


<<5. Hardware configuration>>

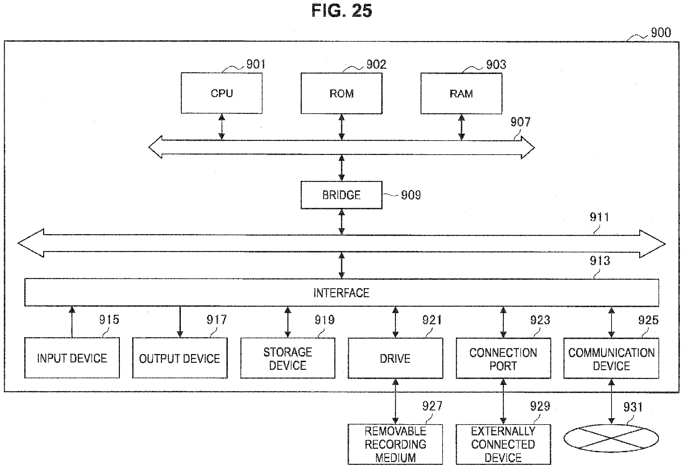

Next, a hardware configuration of an information processing device 900 that forms the noise reduction system 1 according to the embodiment will be described in detail with reference to FIG. 25. FIG. 25 is a functional block diagram illustrating a configuration example of a hardware configuration of the information processing device 900 that forms the noise reduction system 1 according to an embodiment of the present disclosure.

The information processing device 900 constituting the noise reduction system 1 according to the present embodiment is equipped primarily with a CPU 901, ROM 903, and RAM 905. Additionally, the information processing device 900 may also be equipped with a host bus 907, a bridge 909, an external bus 911, an interface 913, an input device 915, an output device 917, a storage device 919, a drive 921, a connection port 923, and a communication device 925.

The CPU 901 serves as an arithmetic processing device and a control device, and controls the overall operation or a part of the operation of the information processing device 900 according to various programs recorded in the ROM 903, the RAM 905, the storage device 919, or a removable recording medium 927. The ROM 903 stores programs, operation parameters, and the like used by the CPU 901. The RAM 905 primarily stores programs that the CPU 901 uses and parameters and the like varying as appropriate during the execution of the programs. These are connected with each other via the host bus 907 configured from an internal bus such as a CPU bus or the like. Note that the FB-NC filter 101a and the loop cancellers 109a and 109b described above with reference to FIG. 6 can be realized by, for example, the CPU 901.

The host bus 907 is connected to the external bus 911 such as a PCI (Peripheral Component Interconnect/Interface) bus via the bridge 909. Additionally, the input device 915, the output device 917, the storage device 919, the drive 921, the connection port 923, and the communication device 925 are connected to the external bus 911 via the interface 913.

The input device 915 is an operation mechanism operated by a user, such as a mouse, a keyboard, a touch panel, buttons, a switch, a lever, or a pedal. Also, the input device 915 may be a remote control mechanism (a so-called remote control) using, for example, infrared light or other radio waves, or may be an externally connected device 929 such as a mobile phone or a PDA conforming to the operation of the information processing device 900. Furthermore, the input device 915 generates an input signal based on, for example, information which is input by a user with the above operation mechanism, and is configured from an input control circuit for outputting the input signal to the CPU 901. The user of the information processing device 900 can input various data to the information processing device 900 and can instruct the information processing device 900 to perform processing by operating this input device 915.

The output device 917 is configured from a device capable of visually or audibly notifying acquired information to a user. Examples of such device include display devices such as a CRT display device, a liquid crystal display device, a plasma display device, an EL display device and lamps, audio output devices such as a speaker and a headphone, a printer, and the like. For example, the output device 917 outputs a result obtained by various processing performed by the information processing device 900. More specifically, the display device displays, in the form of texts or images, a result obtained by various processes performed by the information processing device 900. On the other hand, the audio output device converts an audio signal such as reproduced voice data and sound data into an analog signal, and outputs the analog signal. Note that the acoustic devices 11a and 11b described above with reference to FIG. 6 can be realized by, for example, the output device 917.

The storage device 919 is a device for storing data configured as an example of a storage unit of the information processing device 900 and is used to store data. The storage device 919 is configured from, for example, a magnetic storage device such as a HDD (Hard Disk Drive), a semiconductor storage device, an optical storage device, or a magneto-optical storage device. This storage device 919 stores programs to be executed by the CPU 901, and various data.

The drive 921 is a reader/writer for recording medium, and is embedded in the information processing device 900 or attached externally thereto. The drive 921 reads information recorded in the attached removable recording medium 927 such as a magnetic disk, an optical disk, a magneto-optical disk, or a semiconductor memory, and outputs the read information to the RAM 905. Furthermore, the drive 921 can write in the attached removable recording medium 927 such as a magnetic disk, an optical disk, a magneto-optical disk, or a semiconductor memory. The removable recording medium 927 is, for example, a DVD medium, an HD-DVD medium, or a Blu-ray (a registered trademark) medium. The removable recording medium 927 may be a CompactFlash (CF; a registered trademark), a flash memory, an SD memory card (Secure Digital Memory Card), or the like. Alternatively, the removable recording medium 927 may be, for example, an IC card (Integrated Circuit Card) equipped with a non-contact IC chip or an electronic appliance.

The connection port 923 is a port for allowing devices to directly connect to the information processing device 900. Examples of the connection port 923 include a USB (Universal Serial Bus) port, an IEEE1394 port, a SCSI (Small Computer System Interface) port, and the like. Other examples of the connection port 923 include an RS-232C port, an optical audio terminal, an HDMI (a registered trademark) (High-Definition Multimedia Interface) port, and the like. By the externally connected device 929 connecting to this connection port 923, the information processing device 900 directly obtains various data from the externally connected device 929 and provides various data to the externally connected device 929.

The communication device 925 is a communication interface configured from, for example, a communication device for connecting to a communication network 931. The communication device 925 is, for example, a wired or wireless LAN (Local Area Network), Bluetooth (registered trademark), a communication card for WUSB (Wireless USB), or the like. Alternatively, the communication device 925 may be a router for optical communication, a router for ADSL (Asymmetric Digital Subscriber Line), a modem for various communications, or the like. This communication device 925 can transmit and receive signals and the like in accordance with a predetermined protocol such as TCP/IP on the Internet and with other communication devices, for example. The communication network 931 connected to the communication device 925 is configured from a network and the like, which is connected via wire or wirelessly, and may be, for example, the Internet, a home LAN, infrared communication, radio wave communication, satellite communication, or the like.

Heretofore, an example of the hardware configuration capable of realizing the functions of the information processing device 900 constituting the noise reduction system 1 according to the embodiment of the present disclosure has been shown. Each of the structural elements described above may be configured using a general-purpose material, or may be configured from hardware dedicated to the function of each structural element. Accordingly, the hardware configuration to be used can be changed as appropriate according to the technical level at the time of carrying out the present embodiment. Note that, although not illustrated in FIG. 25, the various structural elements corresponding to the information processing device 900 constituting the noise reduction system 1 according to the embodiment of the present disclosure obviously are provided.

Note that it is also possible to develop a computer program for realizing the respective functions of the information processing device 900 constituting the noise reduction system 1 according to the present embodiment as described above, and implement the computer program in a personal computer or the like. In addition, a computer-readable recording medium storing such a computer program may also be provided. The recording medium may be a magnetic disc, an optical disc, a magneto-optical disc, or flash memory, for example. Furthermore, the above computer program may also be delivered via a network, for example, without using a recording medium. In addition, the number of computers that causes the computer program to be executed is not particularly limited. For example, a plurality of computers (for example, a plurality of servers and the like) may cooperate with each other and execute the computer program.

<<6. Conclusion>>

As described above, the noise reduction system according to the embodiment includes a generation unit (that is, the NC-FB filter) that generates a first noise reduction signal for driving a first acoustic device which outputs a first acoustic for reducing noise. In addition, the noise reduction system according to the embodiment acquires a sound collection result of an acoustic sound including the first acoustic sound propagating from the first acoustic device via a first propagation path and a second acoustic sound propagating from a second acoustic device different from the first acoustic device via a second propagation path by a predetermined sound collection unit. Then, the generation unit generates the first noise reduction signal on a basis of the sound collection result by the sound collection unit and a cancellation signal based on a second noise reduction signal for driving the second acoustic device. In this configuration, the noise reduction system according to the embodiment can improve independency of each of a plurality of systems of feedback. Therefore, it is possible to suppress an influence associated with formation of a figure-eight-shaped closed loop which can occur and is not originally assumed under an environment in which a user hears acoustic sounds output to open spaces and reducing an influence of noise in a more preferred aspect.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.

(1) A signal processing device including:

a generation unit configured to generate a first noise reduction signal for driving a first acoustic device which outputs a first acoustic sound for reducing noise; and

an acquisition unit configured to acquire a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path,

in which the generation unit generates the first noise reduction signal on a basis of the sound collection result and a cancellation signal based on a second noise reduction signal for driving the second acoustic device.

(2) The signal processing device according to (1), including:

a signal processing unit configured to generate the cancellation signal by executing a filtering process based on a feature of the second propagation path on the second noise reduction signal.

(3) The signal processing device according to (2),
in which the first acoustic device and the sound collection unit are held near one ear different from another ear near which the second acoustic device is held among right and left ears of a hearer, and
the signal processing unit executes the filtering process on the second noise reduction signal in accordance with the feature of the second propagation path based on a positional relation among the sound collection unit, the second acoustic device, and a head of the hearer.
(4) The signal processing device according to (3), including:

a detection unit configured to detect the positional relation among the sound collection unit, the second acoustic device, and the head of the hearer,
in which the signal processing unit generates the cancellation signal by executing the filtering process based on the feature of the second propagation path corresponding to a detection result of the positional relation on the second noise reduction signal.

(5) The signal processing device according to (4), in which the signal processing unit selects a filter corresponding to the feature of the second propagation path corresponding to the detection result of the positional relation among a plurality of filters with different features, and generates the cancellation signal by executing the filtering process on the second noise reduction signal on a basis of the selected filter.
(6) The signal processing device according to (4) or (5), in which the detection unit detects the positional relation on a basis of a light reception result obtained by a predetermined light-receiving element that receives light projected from a predetermined light source and reflected from the head of the hearer.
(7) The signal processing device according to (4) or (5), in which the detection unit detects the positional relation on a basis of an image of the head of the hearer captured by a predetermined imaging unit.
(8) The signal processing device according to (4) or (5), in which, on a basis of a sound collection result of an ultrasonic wave output from a predetermined acoustic device and collected by a predetermined sound collection unit, the detection unit detects the positional relation among the head of the hearer, the sound collection unit, and the second acoustic device which are located in an environment in which the ultrasonic wave propagates.
(9) The signal processing device according to (4) or (5), in which the detection unit detects the positional relation on a basis of a delay time until an acoustic sound output from a predetermined acoustic device is collected by a predetermined sound collection unit worn on the head of the hearer.
(10) The signal processing device according to any one of (3) to (9), in which the first acoustic device, the second acoustic device, and the sound collection unit are held to have a predetermined positional relation with respect to a headrest supporting the head of the hearer.
(11) The signal processing device according to (10), in which the first acoustic device and the second acoustic device are provided in the headrest.
(12) The signal processing device according to (10) or (11), in which the headrest is provided in a seat installed in a vehicle.
(13) The signal processing device according to any one of (2) to (12), in which the filtering process includes a noise reduction process based on a feedback scheme.
(14) The signal processing device according to any one of (2) to (13), in which the filtering process is a process of controlling at least any of a gain and a phase of the second noise reduction signal.
(15) The signal processing device according to any one of (1) to (14), including:

another acquisition unit configured to acquire a sound collection result of an acoustic sound collected by another sound collection unit different from the sound collection unit, the acoustic sound including the second acoustic sound propagating from the second acoustic device via a third propagation path and the first acoustic sound propagating from the first acoustic device via a fourth propagation path; and
another generation unit configured to generate the second noise reduction signal on a basis of another cancellation signal based on the sound collection result acquired by the other acquisition unit and the first noise reduction signal.

(16) The signal processing device according to any one of (1) to (15), including:
at least any of the first acoustic device, the second acoustic device, and the sound collection unit.
(17) A signal processing method including: by a processor,
generating a first noise reduction signal for driving a first acoustic device which outputs a first acoustic sound for reducing noise; and

acquiring a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path,

in which the first noise reduction signal is generated on a basis of the sound collection result and a cancellation signal based on a second noise reduction signal for driving the second acoustic device.

(18) A program causing a computer to execute:

generating a first noise reduction signal for driving a first acoustic device which outputs a first acoustic sound for reducing noise; and

acquiring a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path,

in which the first noise reduction signal is generated on a basis of the sound collection result and a cancellation signal based on a second noise reduction signal for driving the second acoustic device.

Reference Signs List

1 noise reduction system
11a, 11b acoustic device
13a, 13b sound collection unit
101a, 101b NC-FB filter
103a, 103b power amplifier
105a, 105b microphone amplifier
107a, 107b subtractor
109a, 109b loop canceller

**Claims**

1. A signal processing device comprising:

   a generation unit configured to generate a first noise reduction signal for driving a first acoustic device which outputs a first acoustic sound for reducing noise; and

   an acquisition unit configured to acquire a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path,

   wherein the generation unit generates the first noise reduction signal on a basis of the sound collection result and a cancellation signal based on a second noise reduction signal for driving the second acoustic device.

2. The signal processing device according to claim 1, comprising:

   a signal processing unit configured to generate the cancellation signal by executing a filtering process based on a feature of the second propagation path on the second noise reduction signal.

3. The signal processing device according to claim 2,
   wherein the first acoustic device and the sound collection unit are held near one ear different from another ear near which the second acoustic device is held among right and left ears of a hearer, and
   the signal processing unit executes the filtering process on the second noise reduction signal in accordance with the feature of the second propagation path based on a positional relation among the sound collection unit, the second acoustic device, and a head of the hearer.

4. The signal processing device according to claim 3, comprising:

a detection unit configured to detect the positional relation among the sound collection unit, the second acoustic device, and the head of the hearer,

wherein the signal processing unit generates the cancellation signal by executing the filtering process based on the feature of the second propagation path corresponding to a detection result of the positional relation on the second noise reduction signal.

5. The signal processing device according to claim 4, wherein the signal processing unit selects a filter corresponding to the feature of the second propagation path corresponding to the detection result of the positional relation among a plurality of filters with different features, and generates the cancellation signal by executing the filtering process on the second noise reduction signal on a basis of the selected filter.

6. The signal processing device according to claim 4, wherein the detection unit detects the positional relation on a basis of a light reception result obtained by a predetermined light-receiving element that receives light projected from a predetermined light source and reflected from the head of the hearer.

7. The signal processing device according to claim 4, wherein the detection unit detects the positional relation on a basis of an image of the head of the hearer captured by a predetermined imaging unit.

8. The signal processing device according to claim 4, wherein, on a basis of a sound collection result of an ultrasonic wave output from a predetermined acoustic device and collected by a predetermined sound collection unit, the detection unit detects the positional relation among the head of the hearer, the sound collection unit, and the second acoustic device which are located in an environment in which the ultrasonic wave propagates.

9. The signal processing device according to claim 4, wherein the detection unit detects the positional relation on a basis of a delay time until an acoustic sound output from a predetermined acoustic device is collected by a predetermined sound collection unit worn on the head of the hearer.

10. The signal processing device according to claim 3, wherein the first acoustic device, the second acoustic device, and the sound collection unit are held to have a predetermined positional relation with respect to a headrest supporting the head of the hearer.

11. The signal processing device according to claim 10, wherein the first acoustic device and the second acoustic device are provided in the headrest.

12. The signal processing device according to claim 10, wherein the headrest is provided in a seat installed in a vehicle.

13. The signal processing device according to claim 2, wherein the filtering process includes a noise reduction process based on a feedback scheme.

14. The signal processing device according to claim 2, wherein the filtering process is a process of controlling at least any of a gain and a phase of the second noise reduction signal.

15. The signal processing device according to claim 1, comprising:

another acquisition unit configured to acquire a sound collection result of an acoustic sound collected by another sound collection unit different from the sound collection unit, the acoustic sound including the second acoustic sound propagating from the second acoustic device via a third propagation path and the first acoustic sound propagating from the first acoustic device via a fourth propagation path; and

another generation unit configured to generate the second noise reduction signal on a basis of another cancellation signal based on the sound collection result acquired by the other acquisition unit and the first noise reduction signal.

16. The signal processing device according to claim 1, comprising:

at least any of the first acoustic device, the second acoustic device, and the sound collection unit.

17. A signal processing method comprising: by a processor,
generating a first noise reduction signal for driving a first acoustic device which outputs a first acoustic sound for reducing noise; and

acquiring a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path,

wherein the first noise reduction signal is generated on a basis of the sound collection result and a cancellation signal based on a second noise reduction signal for driving the second acoustic device.

18. A program causing a computer to execute:

generating a first noise reduction signal for driving a first acoustic device which outputs a first acoustic sound for reducing noise; and

acquiring a sound collection result of an acoustic sound collected by a predetermined sound collection unit, the acoustic sound including the first acoustic sound propagating from the first acoustic device via a first propagation path and a second acoustic sound propagating from a second acoustic device different from the first acoustic device via a second propagation path,

wherein the first noise reduction signal is generated on a basis of the sound collection result and a cancellation signal based on a second noise reduction signal for driving the second acoustic device.

**FIG. 1**

# FIG. 2

# FIG. 3

noise

d

$F_1$

13

y

$$y = \frac{1}{1 + \beta F_1} d$$

$-\beta$

11

# FIG. 4

FIG. 5

# FIG. 6

<u>1</u>

EP 3 441 965 A1

**FIG. 7**

# FIG. 8

FIG. 9

# FIG. 10

# FIG. 11

# FIG. 12

# FIG. 13

2

## FIG. 14

# FIG. 15

# FIG. 16

# FIG. 17

## FIG. 18

351

352

U11

## FIG. 19

353a

353b

U11

## FIG. 20

354

355

U11

## FIG. 21

356a

356b

U11

357

FIG. 22

# FIG. 23

# FIG. 24

## FIG. 25

## INTERNATIONAL SEARCH REPORT

| International application No. |
| --- |
| PCT/JP2017/002219 |

### A. CLASSIFICATION OF SUBJECT MATTER
*G10K11/178*(2006.01)i, *B60R11/02*(2006.01)i, *H04R1/02*(2006.01)i

According to International Patent Classification (IPC) or to both national classification and IPC

### B. FIELDS SEARCHED

Minimum documentation searched (classification system followed by classification symbols)
G10K11/178, B60R11/02, H04R1/02

Documentation searched other than minimum documentation to the extent that such documents are included in the fields searched
Jitsuyo Shinan Koho       1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2004-165994 A (Nippon Telegraph and Telephone Corp.), 10 June 2004 (10.06.2004), paragraphs [0014] to [0016]; fig. 1, 2 (Family: none) | 1,2,13,14, 16–18 |
| X | JP 2006-262338 A (Yamaha Corp.), 28 September 2006 (28.09.2006), paragraphs [0022] to [0045]; fig. 1 & EP 1703767 A2 paragraphs [0024] to [0047]; fig. 1 & US 2006/0210091 A1 | 1,2,13–18 |
| Y | | 3–12 |

☒ Further documents are listed in the continuation of Box C.          ☐ See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 04 April 2017 (04.04.17) | 18 April 2017 (18.04.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/002219

C (Continuation).    DOCUMENTS CONSIDERED TO BE RELEVANT

| Category* | Citation of document, with indication, where appropriate, of the relevant passages | Relevant to claim No. |
|---|---|---|
| Y | US 5133017 A   (ACTIVE NOISE AND VIBRATION TECHNOLOGIES, INC.), 21 July 1992 (21.07.1992), column 3, lines 32 to 48; fig. 1, 2 & WO 1991/015896 A1      & EP 533680 A1 & DE 69130452 T2         & AU 7440191 A & ES 2125866 T3          & CA 2040115 A1 & DK 533680 T3 | 3-12 |
| Y | JP 2007-160974 A  (Olympus Corp.), 28 June 2007 (28.06.2007), paragraphs [0086] to [0087]; fig. 22, 23 & EP 1795398 A1 paragraphs [0057] to [0058]; fig. 22, 23 & US 2007/0133949 A1     & EP 1972502 A1 & CN 1980484 A | 4-9,12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4882773 B